# EUROPEAN PATENT APPLICATION

(11) **EP 4 350 548 A1**
(43) Date of publication of application: **10.04.2024**
(21) Application number: 22815997.6
(22) Date of filing: 27.05.2022
(51) Int. Cl.: G06F 21/55

(54) **MONITORING DEVICE, MONITORING SYSTEM, AND MONITORING METHOD**

(30) Priority: 31.05.2021 WO PCT/JP2021/020677
(71) Applicant: Panasonic Intellectual Property Corporation of America, Torrance, CA 90504 (US)
(72) Inventor: HIRANO, Ryo, Kadoma-shi Osaka 571-0057 (JP); UJIIE, Yoshihiro, Kadoma-shi Osaka 571-0057 (JP); KISHIKAWA, Takeshi, Kadoma-shi Osaka 571-0057 (JP); HAGA, Tomoyuki, Kadoma-shi Osaka 571-0057 (JP); ANZAI, Jun, Kadoma-shi Osaka 571-0057 (JP); IMAMOTO, Yoshiharu, Kadoma-shi Osaka 571-0057 (JP)
(74) Representative: Grünecker Patent- und Rechtsanwälte PartG mbB
(86) International application number: PCT/JP2022/021731
(87) International publication number: WO 2022/255247

(57) **Abstract**

A monitoring device includes three or more monitors each monitoring, as a monitoring target, at least one of software and a communication log. The three or more monitors include a first monitor operating with a first execution privilege, a second monitor operating with a second execution privilege having a reliability level lower than the first execution privilege, and a third monitor operating with a third execution privilege having a reliability level that is the same as the second execution privilege or that is lower than the second execution privilege. The first monitor monitors software of the second monitor, and at least one of the first monitor or the second monitor monitors software of the third monitor.

## Description

### [Technical Field]

The present disclosure relates to a monitoring device, a monitoring system, and a monitoring method for monitoring software and communication logs.

### [Background Art]

PTL 1 discloses a method which, by having a monitoring virtual machine on virtual software monitor a virtual machine to be monitored on the virtual software, detects anomalies in the virtual machine to be monitored.

### [Citation List]

### [Patent Literature]

[PTL 1] Japanese Unexamined Patent Application Publication No. 2019-144785

### [Summary of Invention]

### [Technical Problem]

The present disclosure solves conventional problems and provides a monitoring device and the like that can detect an anomaly occurring in an ECU even when a monitoring program implemented in a region having a low reliability level has been tampered with.

### [Solution to Problem]

A monitoring device according to one aspect of the present disclosure includes three or more monitors that each monitor at least one of software or a communication log as a monitoring target. The three or more monitors include a first monitor, a second monitor, and a third monitor. The first monitor operates with a first execution privilege, the second monitor operates with a second execution privilege that has a lower reliability level than that of the first execution privilege, and the third monitor operates with a third execution privilege that has a same reliability level as that of the second execution privilege or has a lower reliability level than that of the second execution privilege. The first monitor monitors software of the second monitor, and at least one of the first monitor or the second monitor monitors software of the third monitor.

A monitoring system according to one aspect of the present disclosure includes a monitoring device and a monitoring server. The monitoring device includes: three or more monitors that each monitor at least one of software and a communication log as a monitoring target; and a monitoring server communicator that transmits at least two of a monitor identifier, a monitoring target identifier, a normal determination time, and an anomaly determination time to the monitoring server as a monitoring result. The three or more monitors include a first monitor, a second monitor, and a third monitor. The first monitor operates with a first execution privilege, the second monitor operates with a second execution privilege that has a lower reliability level than that of the first execution privilege, and the third monitor operates with a third execution privilege that has a same reliability level as that of the second execution privilege or has a lower reliability level than that of the second execution privilege. The first monitor monitors software of the second monitor, at least one of the first monitor or the second monitor monitors software of the third monitor, and the monitoring server includes a monitoring result display that receives the monitoring result and displays the monitoring result in a graphical user interface.

A monitoring method according to one aspect of the present disclosure is a monitoring method executed by a monitoring device including three or more monitors. The three or more monitors include a first monitor, a second monitor, and a third monitor. The first monitor operates with a first execution privilege, the second monitor operates with a second execution privilege that has a lower reliability level than that of the first execution privilege, and the third monitor operates with a third execution privilege that has a same reliability level as that of the second execution privilege or has a lower reliability level than that of the second execution privilege. The monitoring method includes: monitoring software of the second monitor by the first monitor; and monitoring software of the third monitor by at least one of the first monitor or the second monitor.

### [Advantageous Effects of Invention]

According to the monitoring device of the present disclosure, an anomaly occurring in an ECU can be detected even when a monitoring program implemented in a region having a low reliability level has been tampered with.

### [Brief Description of Drawings]

[FIG. 1]

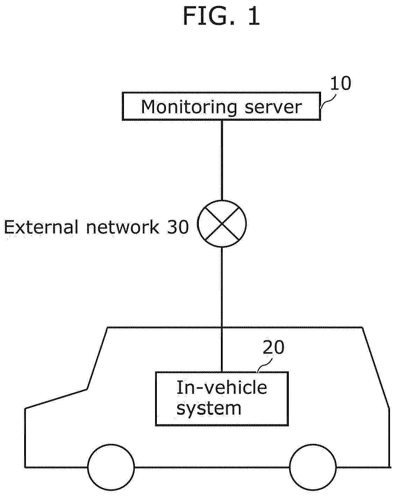

   FIG. 1 is an overall block diagram illustrating a monitoring system according to an embodiment.
[FIG. 2]

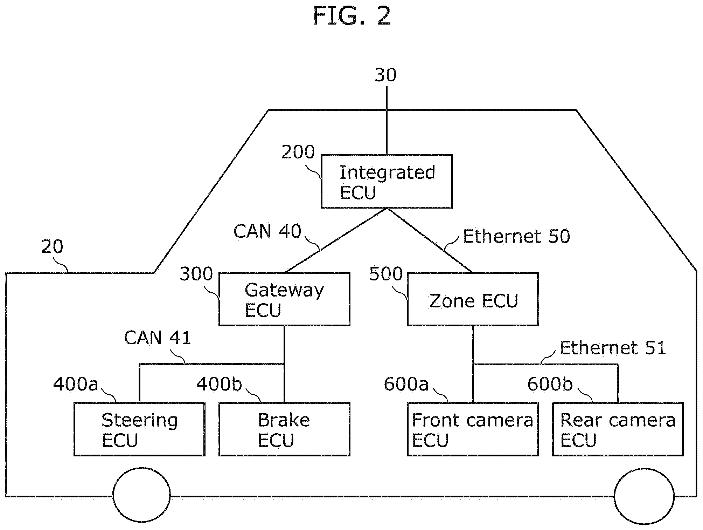

   FIG. 2 is a block diagram illustrating an in-vehicle system according to the embodiment.
[FIG. 3]

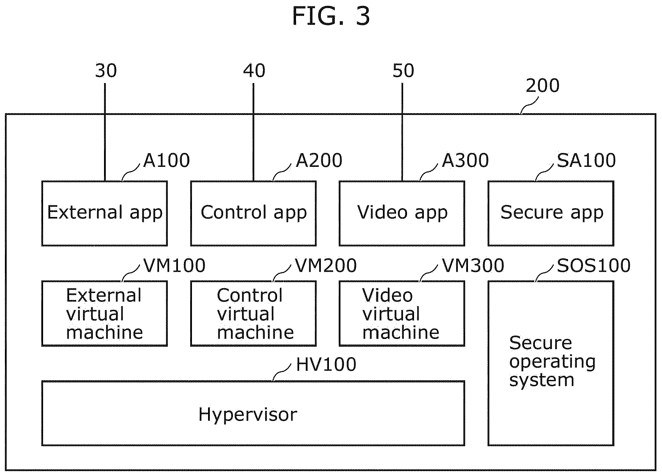

   FIG. 3 is a block diagram illustrating an integrated ECU according to the embodiment.
[FIG. 4]

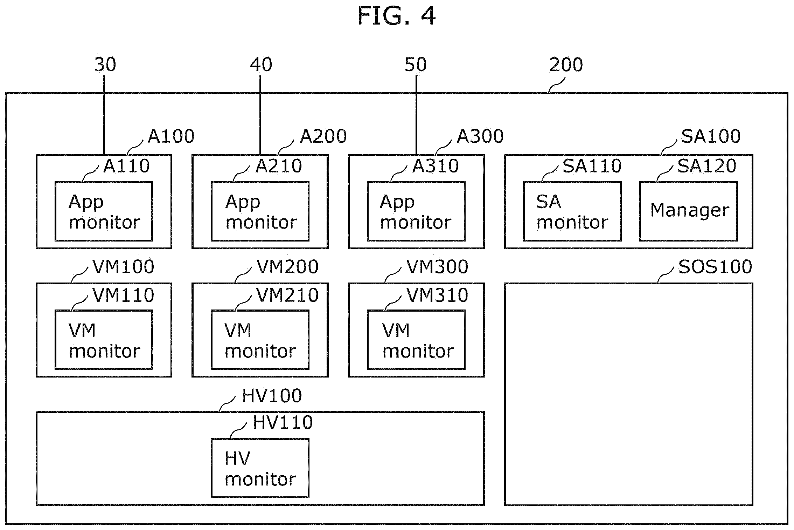

   FIG. 4 is a block diagram illustrating the integrated ECU according to the embodiment in detail.
[FIG. 5]

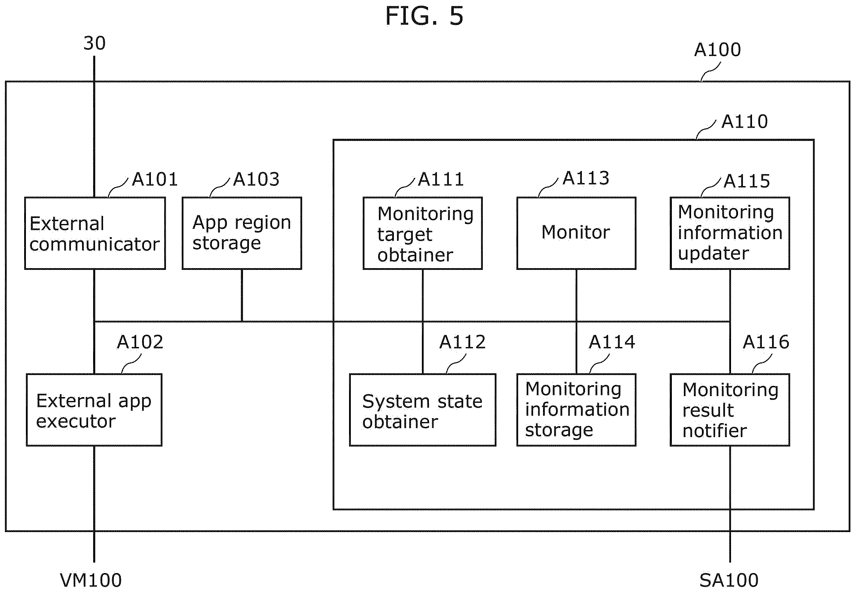

   FIG. 5 is a block diagram illustrating an external app according to the embodiment.
[FIG. 6]

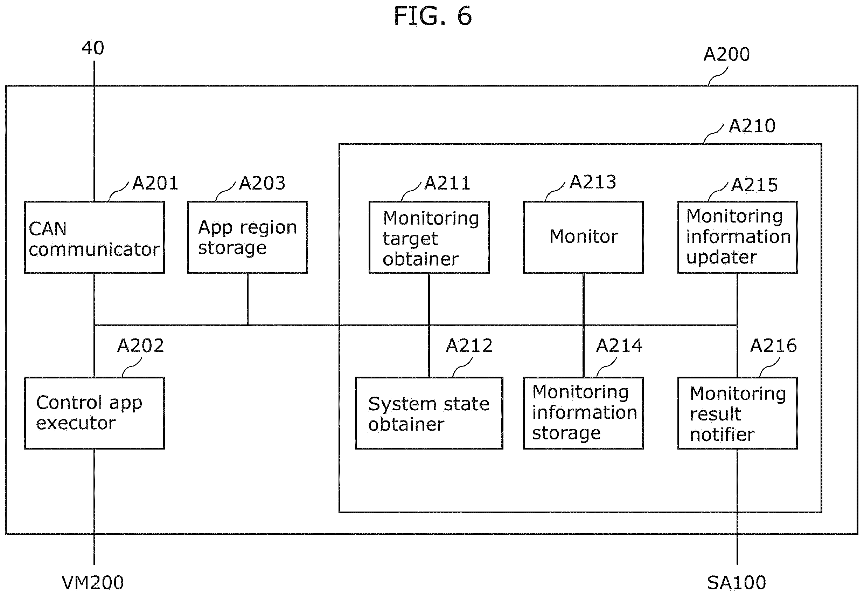

   FIG. 6 is a block diagram illustrating a control app according to the embodiment.
[FIG. 7]

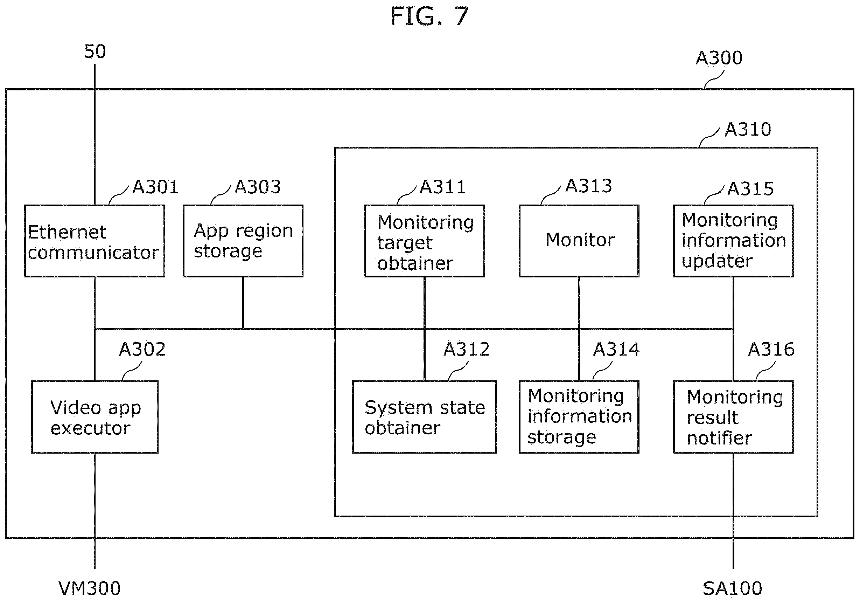

   FIG. 7 is a block diagram illustrating a video app according to the embodiment.
[FIG. 8]

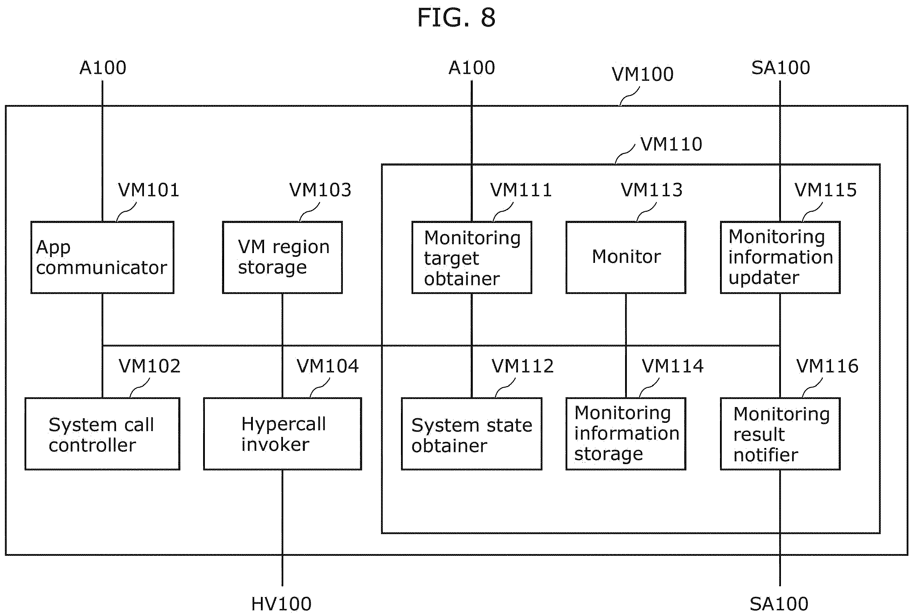

   FIG. 8 is a block diagram illustrating an external virtual machine according to the embodiment.
[FIG. 9]

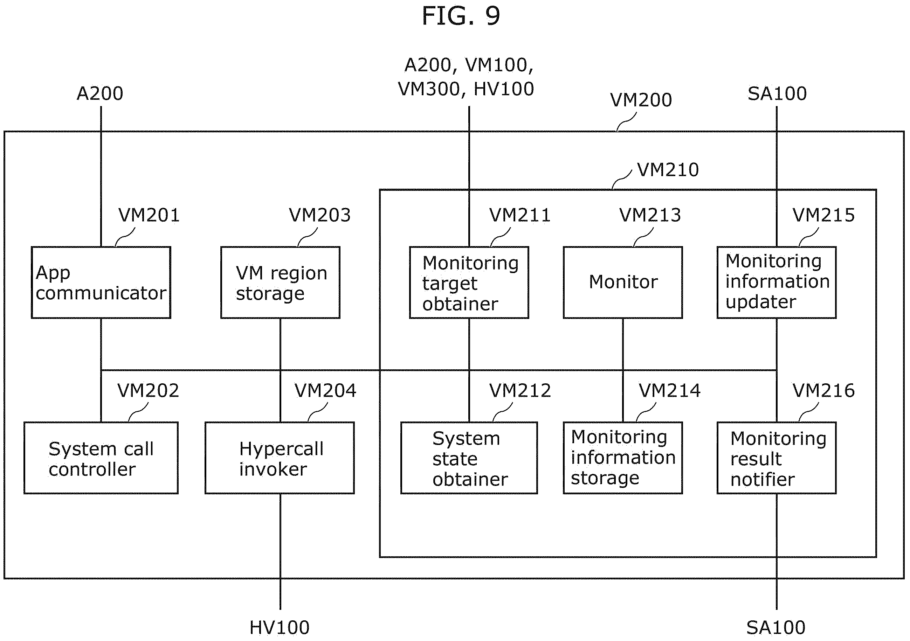

   FIG. 9 is a block diagram illustrating a control virtual machine according to the embodiment.
[FIG. 10]

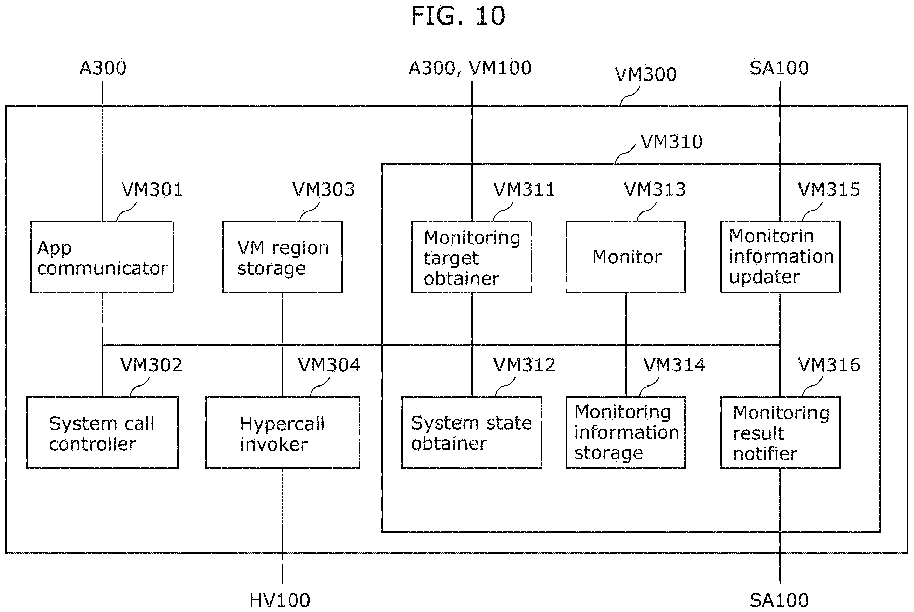

   FIG. 10 is a block diagram illustrating a video virtual machine according to the embodiment.
[FIG. 11]

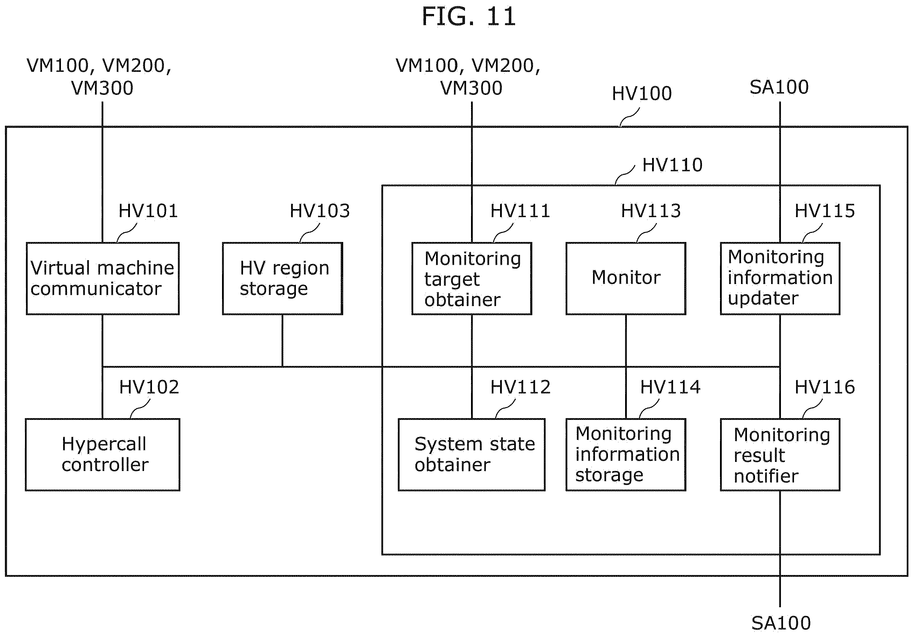

   FIG. 11 is a block diagram illustrating a hypervisor according to the embodiment.
[FIG. 12]

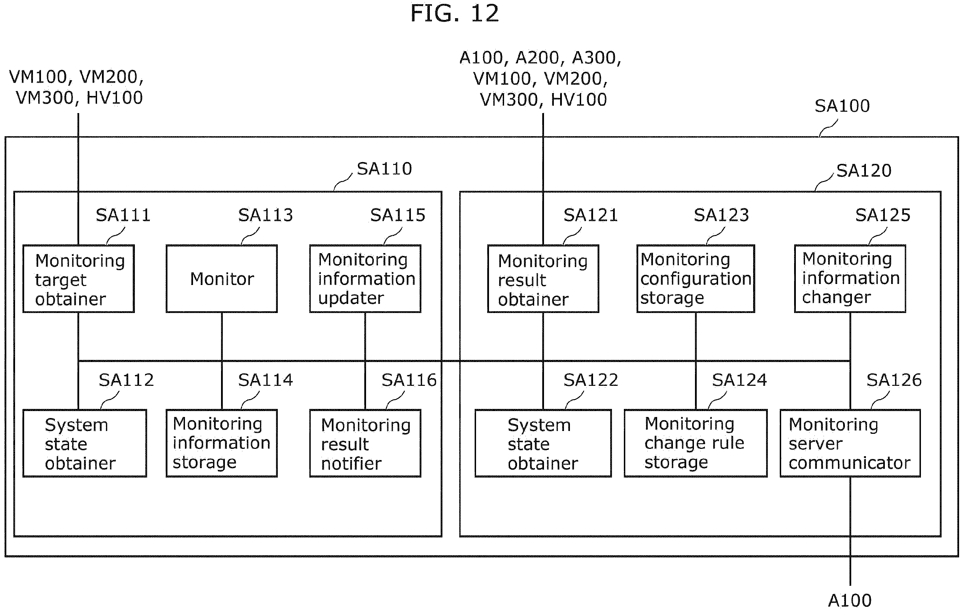

   FIG. 12 is a block diagram illustrating a secure app according to the embodiment.
[FIG. 13]

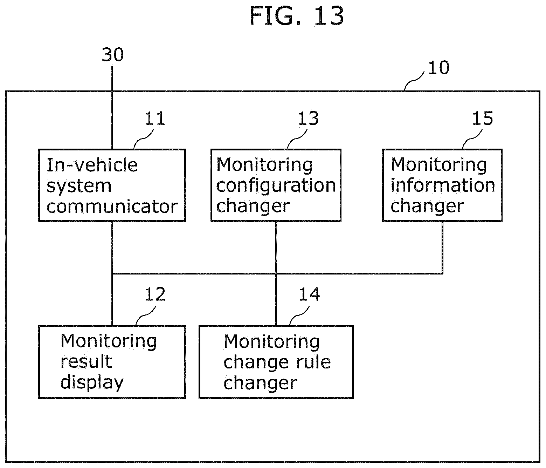

   FIG. 13 is a block diagram illustrating a monitoring server according to the embodiment.
[FIG. 14]

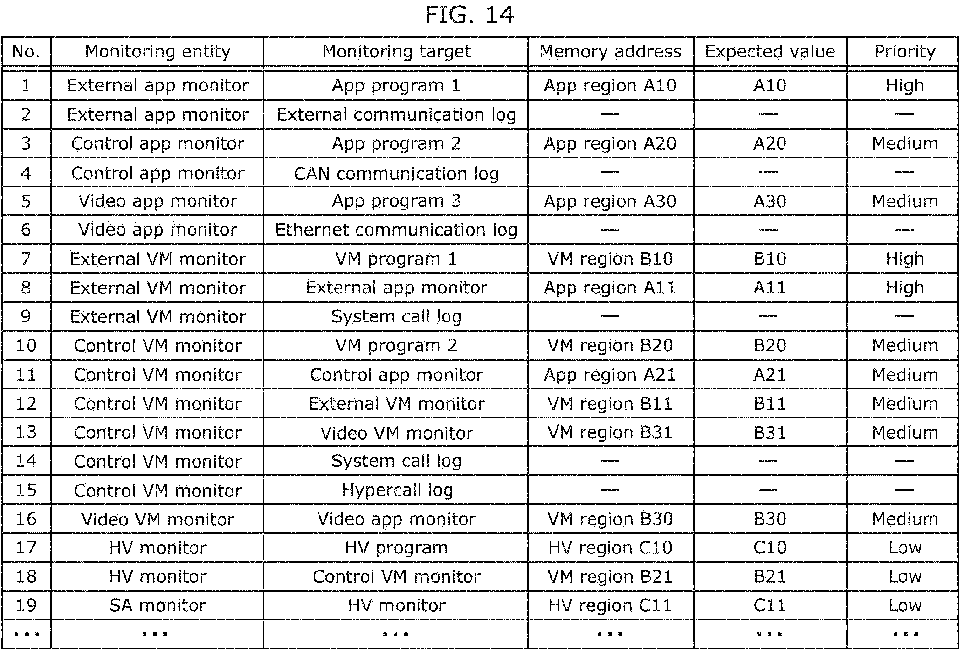

   FIG. 14 is a diagram illustrating an example of monitoring information according to the embodiment.
[FIG. 15]

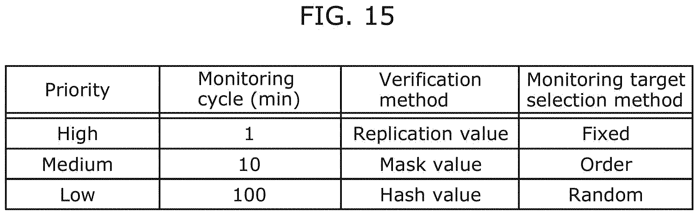

   FIG. 15 is a diagram illustrating an example of monitoring information according to the embodiment.
[FIG. 16]

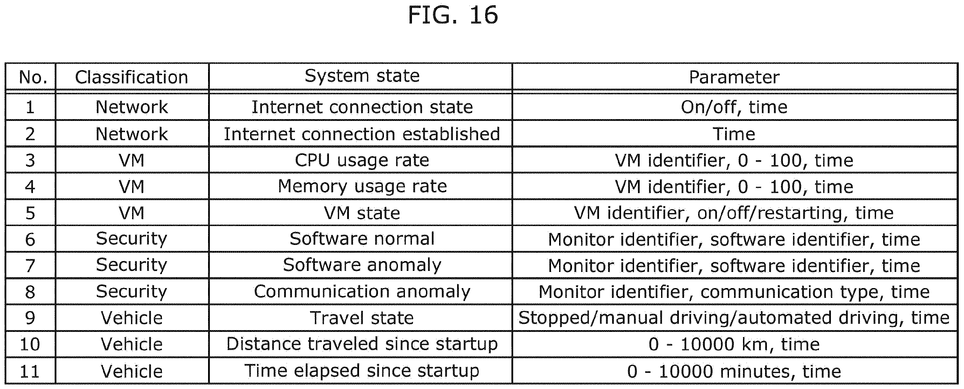

   FIG. 16 is a diagram illustrating an example of system states according to the embodiment.
[FIG. 17]

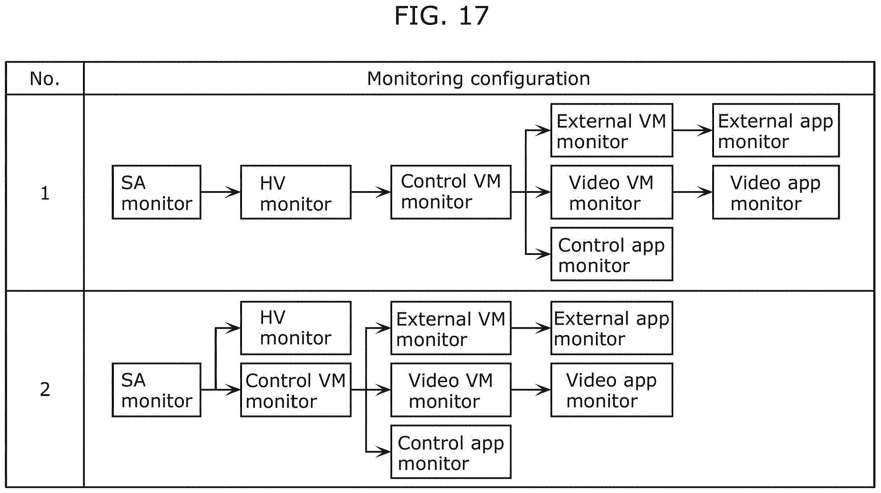

   FIG. 17 is a diagram illustrating an example of a monitoring configuration according to the embodiment.
[FIG. 18]

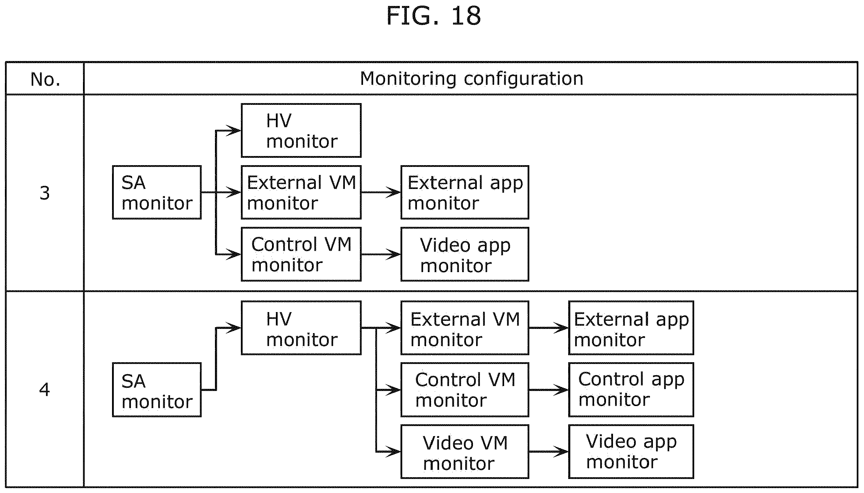

   FIG. 18 is a diagram illustrating an example of a monitoring configuration according to the embodiment.
[FIG. 19]

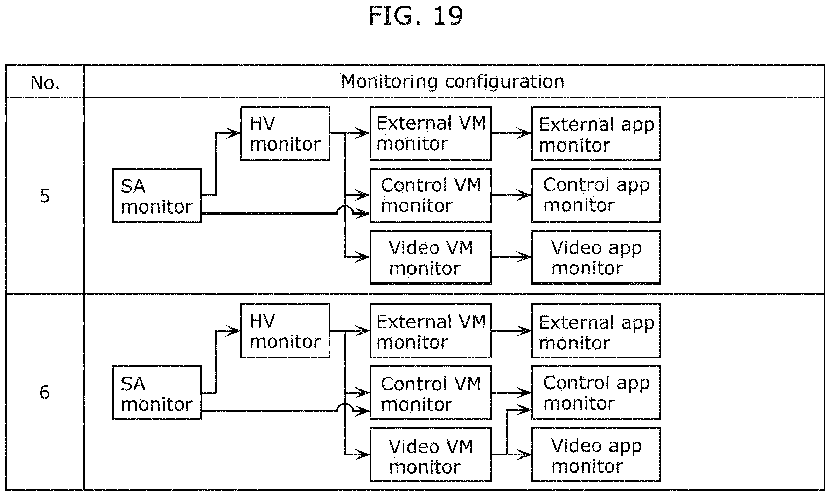

   FIG. 19 is a diagram illustrating an example of a monitoring configuration according to the embodiment.
[FIG. 20]

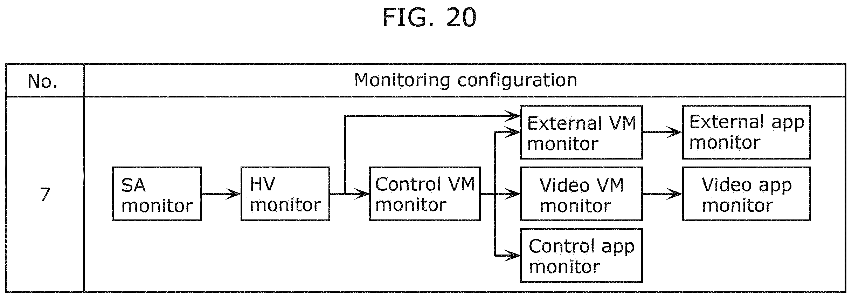

   FIG. 20 is a diagram illustrating an example of a monitoring configuration according to the embodiment.
[FIG. 21]

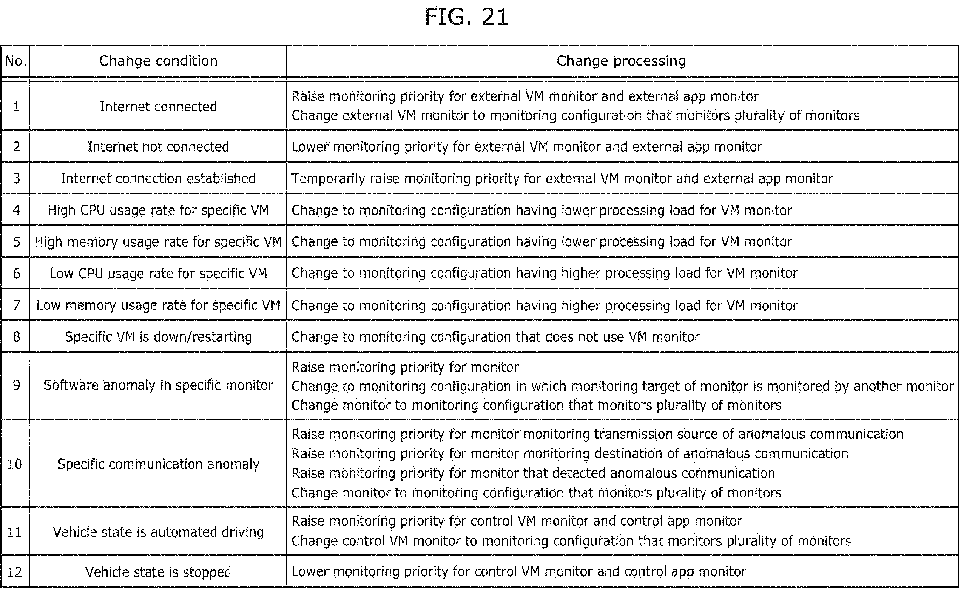

   FIG. 21 is a diagram illustrating an example of monitoring change rules according to the embodiment.
[FIG. 22]

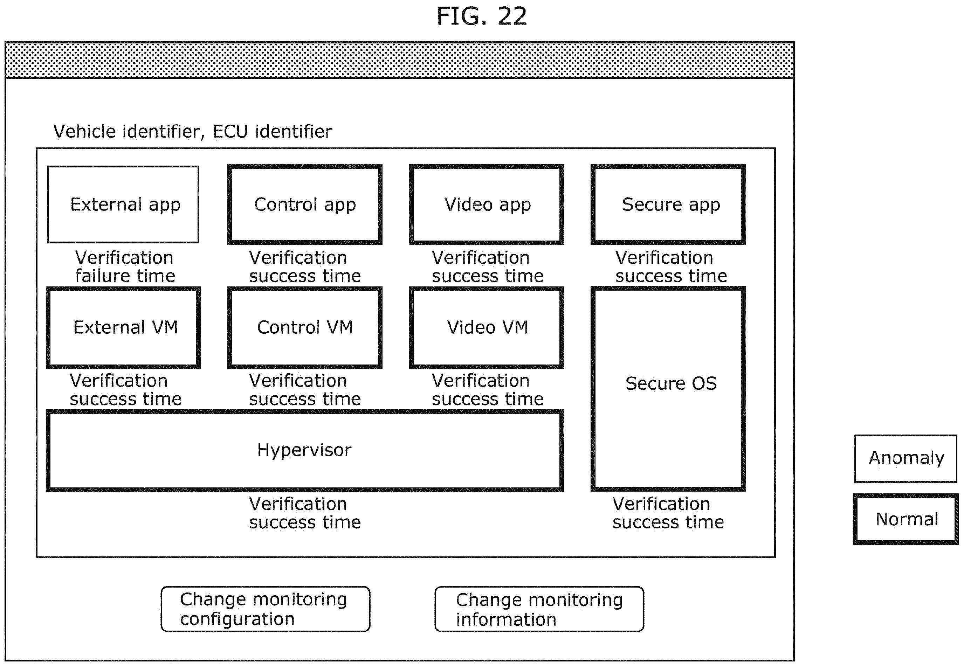

   FIG. 22 is a diagram illustrating an example of a monitoring result display according to the embodiment.
[FIG. 23]

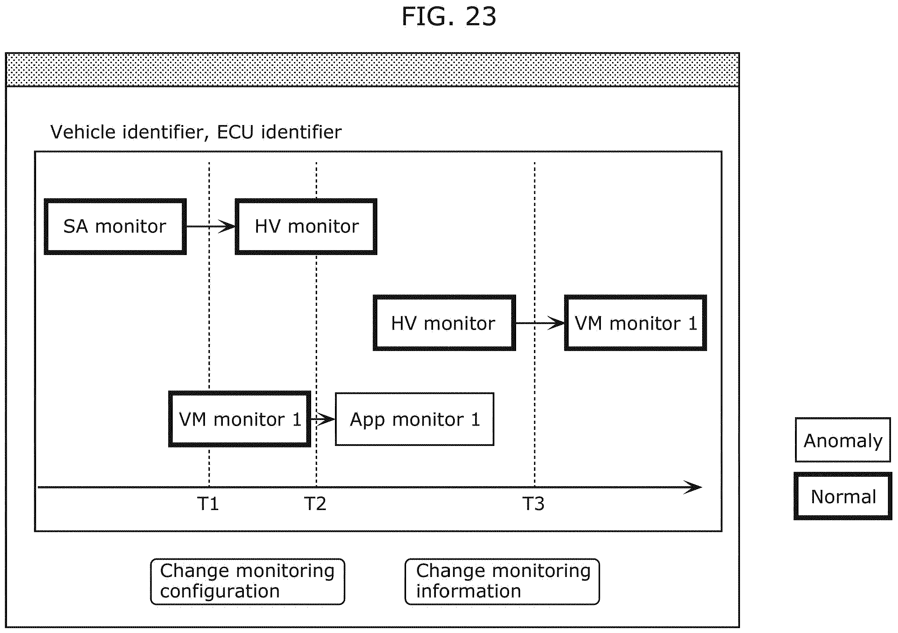

   FIG. 23 is a diagram illustrating an example of a monitoring result display according to the embodiment.
[FIG. 24]

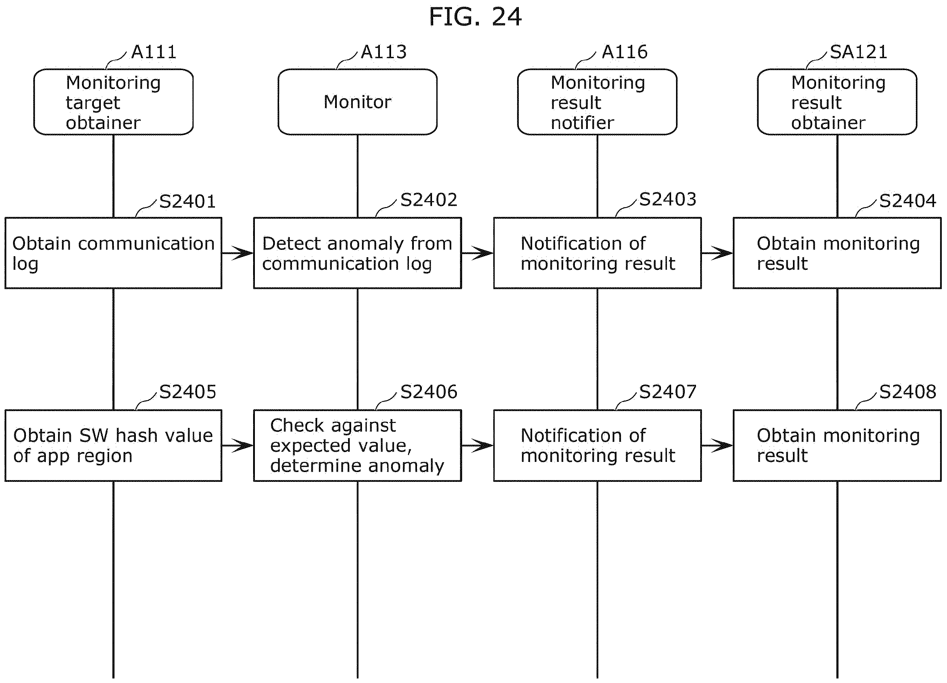

   FIG. 24 is a diagram illustrating a sequence of monitoring processing by an app monitor according to the embodiment.
[FIG. 25]

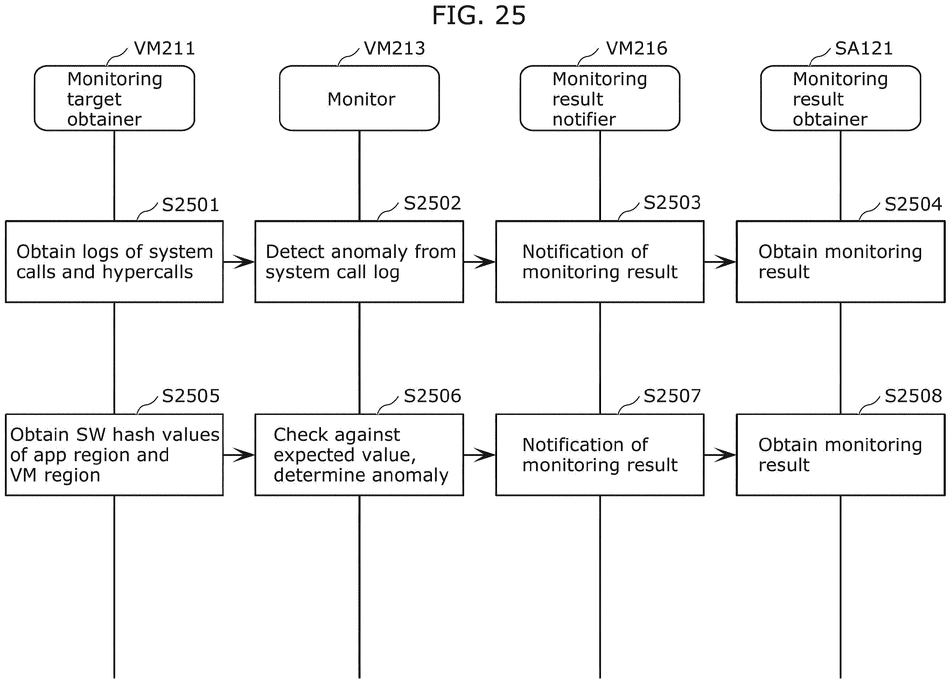

   FIG. 25 is a diagram illustrating a sequence of monitoring processing by a VM monitor according to the embodiment.
[FIG. 26]

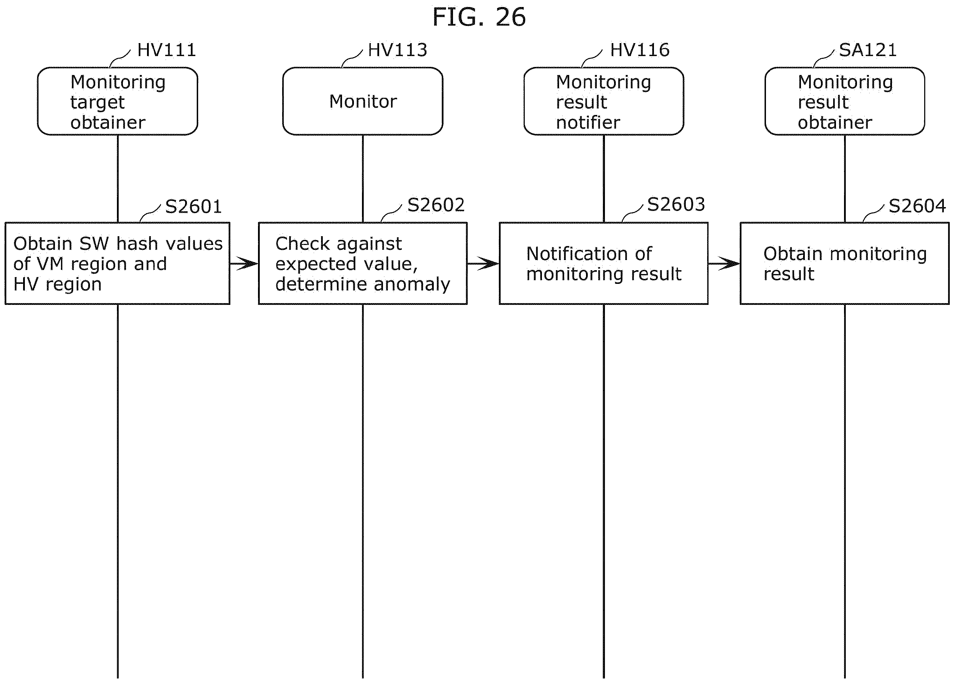

   FIG. 26 is a diagram illustrating a sequence of monitoring processing by an HV monitor according to the embodiment.
[FIG. 27]

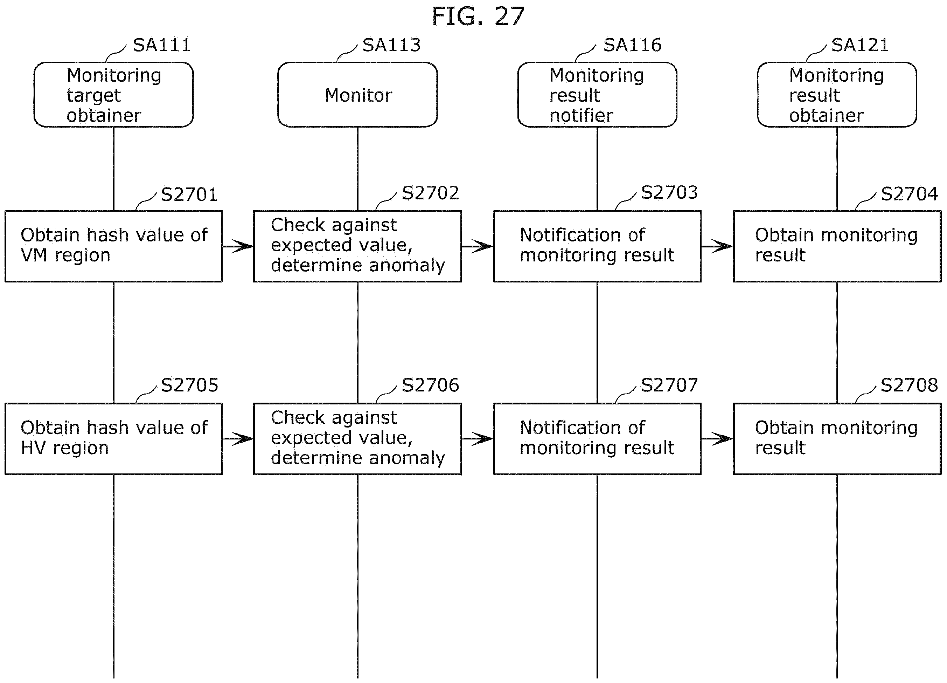

   FIG. 27 is a diagram illustrating a sequence of monitoring processing by an SA monitor according to the embodiment.
[FIG. 28]

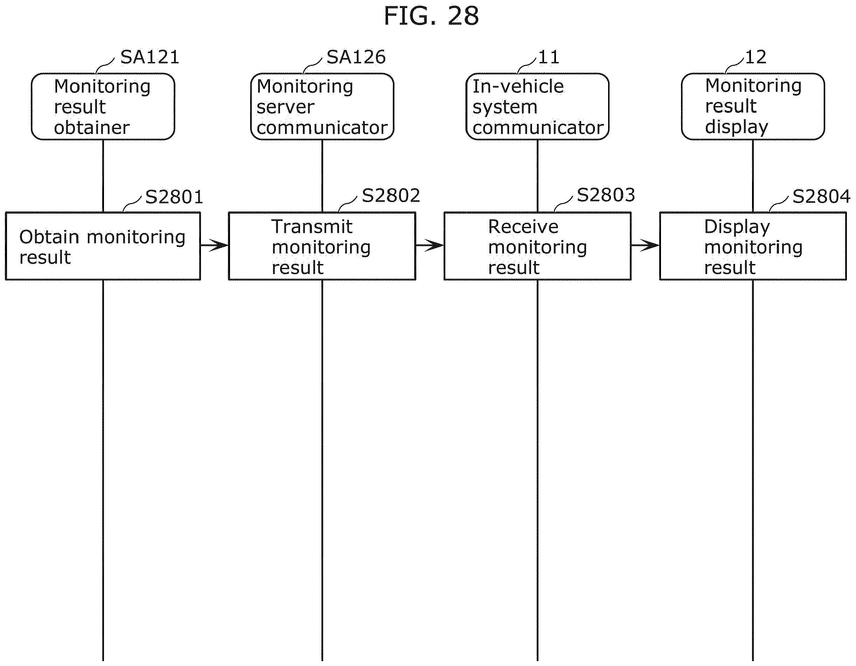

   FIG. 28 is a diagram illustrating a sequence of monitoring server notification processing according to an embodiment.
[FIG. 29]

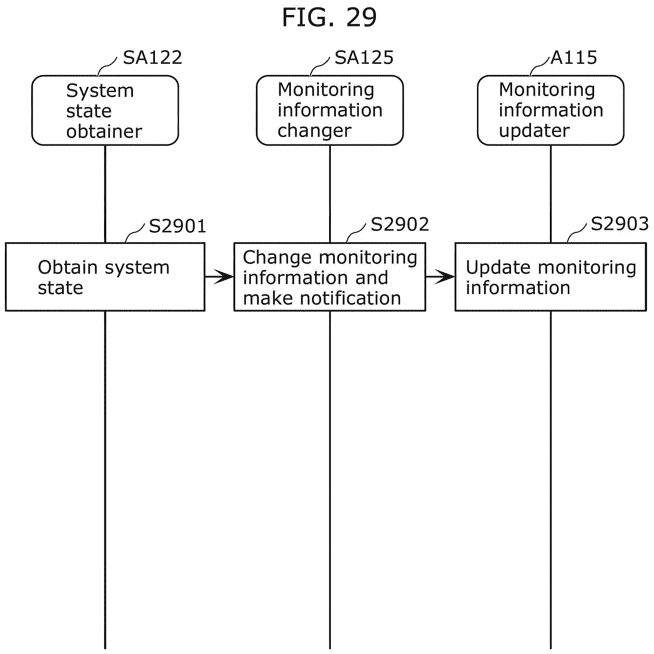

   FIG. 29 is a diagram illustrating a sequence of processing for making a monitoring change from a manager according to the embodiment.
[FIG. 30]

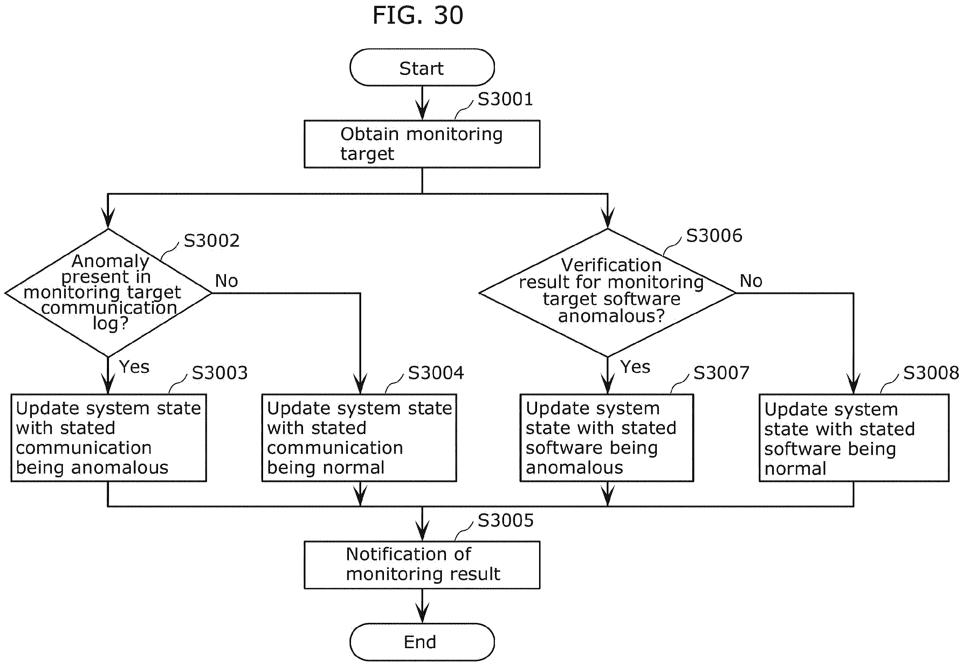

   FIG. 30 is a diagram illustrating a flowchart for monitoring processing according to the embodiment.
[FIG. 31]

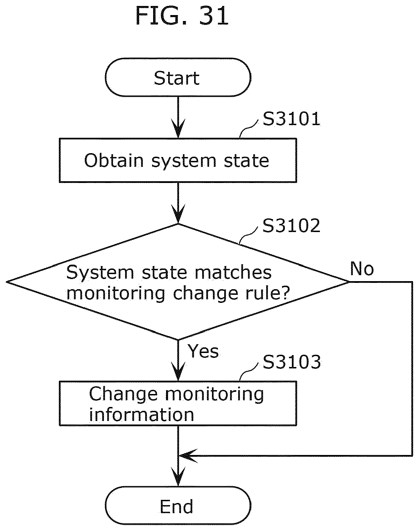

   FIG. 31 is a diagram illustrating a flowchart for monitoring change processing according to the embodiment.
[FIG. 32]

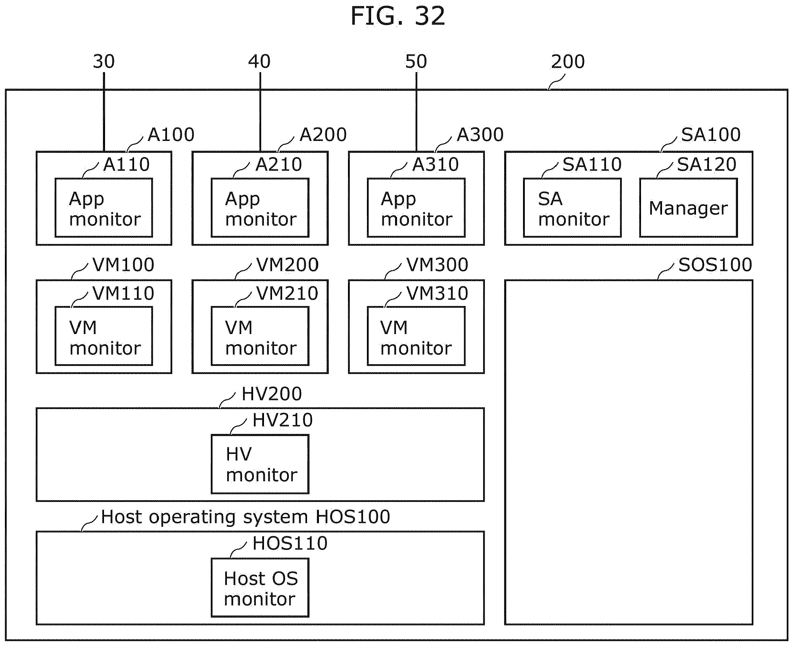

   FIG. 32 is a block diagram illustrating Variation 1 on the integrated ECU according to the embodiment in detail.
[FIG. 33]

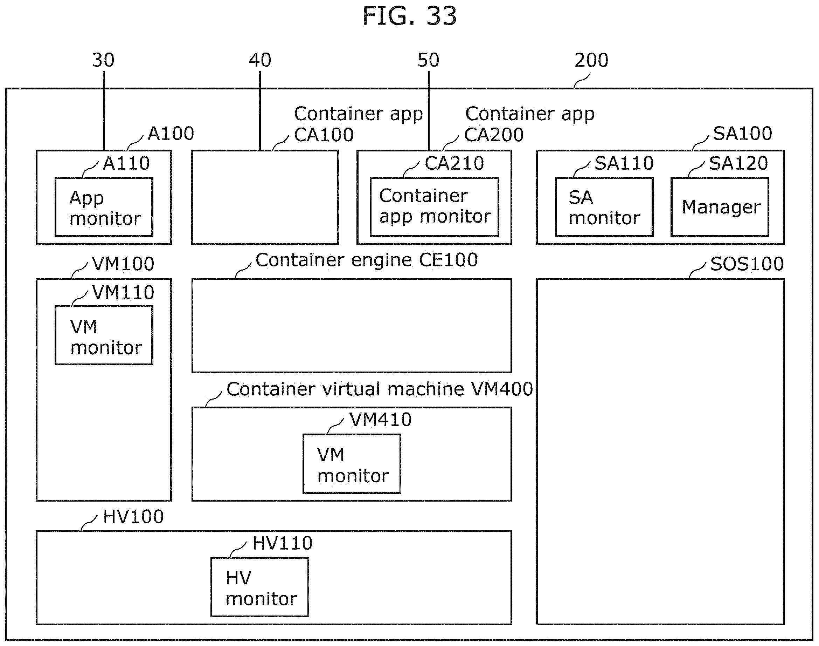

   FIG. 33 is a block diagram illustrating Variation 2 on the integrated ECU according to the embodiment in detail.

### [Description of Embodiments]

In recent years, in-vehicle systems are becoming increasingly complex to provide users with advanced functions such as automated driving. In order to solve issues with development time and costs, which increase with complexity, there is a movement to integrate functions that thus far have been spread across multiple Electronic Control Units (ECUs) into a single ECU. In ECU integration, virtualization technology is used to run multiple virtual computers on a single ECU. These virtual computers are called virtual machines, and the software that serves as the virtualization infrastructure for running the multiple virtual machines is called a hypervisor.

There is a problem in that a vulnerability or specification flaw included in virtual software or a device driver within the hypervisor may, if pronounced, lead to tampering with the memory region allocated to the hypervisor or virtual machines. As a countermeasure, PTL 1 describes a method that, by placing a monitoring virtual machine and a monitoring target virtual machine on virtual software and monitoring the monitoring target from the monitoring virtual machine, detects anomalies in the monitoring ta rg et.

Incidentally, when integrating an In-Vehicle Infotainment (IVI) system, in which third-party applications can be freely installed, with an Advanced Driver Assistance System (ADAS), which supports automated driving by instructing the vehicle to control the travel, stopping, turning, and the like of the vehicle, in a single ECU in the vehicle system, if the memory region related to the method of controlling the ADAS is tampered with by a malicious third-party application, there is a risk that the driving of the vehicle will be interfered with.

However, while the method of PTL 1 can detect anomalies in the monitoring target if the monitoring virtual machine has not been tampered with, the method cannot detect anomalies if the monitoring virtual machine itself has been tampered with by a malicious third-party application.

To solve the above-described problems, a monitoring device according to one aspect of the present disclosure includes three or more monitors that each monitor at least one of software or a communication log as a monitoring target. The three or more monitors include a first monitor, a second monitor, and a third monitor. The first monitor operates with a first execution privilege, the second monitor operates with a second execution privilege that has a lower reliability level than that of the first execution privilege, and the third monitor operates with a third execution privilege that has a same reliability level as that of the second execution privilege or has a lower reliability level than that of the second execution privilege. The first monitor monitors software of the second monitor, and at least one of the first monitor or the second monitor monitors software of the third monitor.

Through this, it can be assumed that an attacker who has infiltrated the system will aim to gain the stronger second execution privilege and the first execution privilege after gaining the weaker third execution privilege. Accordingly, an anomaly in the software of the third monitor can be detected from the first monitor or the second monitor even if the attacker attempts to bypass the monitoring by tampering with the software of the third monitor after gaining the third execution privilege, which is weaker than the second execution privilege. Additionally, it can be assumed that environments where programs are run with a strong execution privilege are isolated from environments where programs are run with a weak execution privilege. Accordingly, using three levels of monitors having different execution privileges makes it possible to monitor a wide range of monitoring targets throughout the three types of environments. Furthermore, it can be assumed that software running with a strong execution privilege is implemented with simple algorithms so as not to contain vulnerabilities. Accordingly, simple algorithms can be used for monitors operating with a strong execution privilege, while advanced and complex algorithms can be used for monitors operating with a weak execution privilege.

The three or more monitors may include four or more monitors. The four or more monitors include the first monitor, the second monitor, the third monitor, and a fourth monitor that operates with a fourth execution privilege that has a same reliability level as that of the third execution privilege or has a lower reliability level than that of the third execution privilege. At least one of the first monitor, the second monitor, or the third monitor monitors software of the fourth monitor.

Through this, it can be assumed that an attacker who has infiltrated the system will aim to gain the stronger third execution privilege and the strong second execution privilege and first execution privilege after gaining the weaker fourth execution privilege. Accordingly, an anomaly in the software of the fourth monitor can be detected from the first monitor, the second monitor, or the third monitor even if the attacker attempts to bypass the monitoring by tampering with the software of the fourth monitor after gaining the fourth execution privilege, which is weaker than the third execution privilege. Additionally, it can be assumed that environments where programs are run with a strong execution privilege are isolated from environments where programs are run with a weak execution privilege. Accordingly, using four levels of monitors having different execution privileges makes it possible to monitor a wide range of monitoring targets throughout the four types of environments. Furthermore, it can be assumed that software running with a strong execution privilege is implemented with simple algorithms so as not to contain vulnerabilities. Accordingly, simple algorithms can be used for monitors operating with a strong execution privilege, while advanced and complex algorithms can be used for monitors operating with a weak execution privilege.

The monitoring device may run on a secure app, a virtualization software platform, and one or more virtual machines. The first execution privilege may be one of an execution privilege for the secure app, an execution privilege for the virtualization software platform, or a kernel execution privilege for each of the one or more virtual machines. The second execution privilege may be one of the execution privilege for the virtualization software platform, the kernel execution privilege for each of the virtual machines, or a user privilege for each of the one or more virtual machines. The third execution privilege may be one of the kernel execution privilege for each of the one or more virtual machines or the user privilege for each of the one or more virtual machines. The execution privilege for the secure app may have a higher reliability level than that of the execution privilege for the virtualization software platform. The execution privilege for the virtualization software platform may have a higher reliability level than that of the kernel execution privilege for each of the one or more virtual machines. The kernel execution privilege for each of the virtual machine may have a higher reliability level than that of the user privilege for each of the one or more virtual machines.

Through this, it can be assumed that an attacker who has gained a user privilege for a virtual machine by exploiting a vulnerability in a user app of the virtual machine will attempt to gain the kernel privilege of the virtual machine, the execution privilege of the hypervisor, and the execution privilege of the secure app. Accordingly, an anomaly in a monitor having a weaker execution privilege can be detected from a monitor having a stronger execution privilege even if, after gaining the user privilege of the virtual machine, the kernel privilege of the virtual machine, or the execution privilege of the hypervisor, the attacker attempts to bypass the monitoring by tampering with the software of the monitor operating with the execution privilege that has been gained. Additionally, it can be assumed that it is difficult to obtain software in the user space of a virtual machine, network logs in the user space of a virtual machine, and communication logs such as system calls between the user space and the kernel space of a virtual machine with the execution privilege of the secure application, the execution privilege of the hypervisor, and the like. Accordingly, separating the monitors according to the execution privilege makes it possible to monitor a wider range of monitoring targets. Furthermore, it can be assumed that software running with a secure app execution privilege, a hypervisor execution privilege, or a virtual machine kernel privilege is implemented with simple algorithms so as not to contain vulnerabilities. Accordingly, that simple algorithms can be used for monitors operating with a strong execution privilege, while advanced and complex algorithms can be used for monitors operating with a weak execution privilege.

The monitoring device may run on the virtualization software platform and two or more virtual machines. The two or more virtual machines may be classified as a first virtual machine or a second virtual machine in accordance with a likelihood of being tampered with by an attacker. When two or more monitors, among the three or more monitors, that operate with an execution privilege assigned to each of the two or more virtual machines are present, a monitor of the first virtual machine may include software of a monitor of the second virtual machine as a monitoring target, and the two or more monitors that operate with the execution privilege assigned to each of the virtual machines may include the monitor of the first virtual machine and the monitor of the second virtual machine.

Through this, it can be assumed that an attacker who has infiltrated the system from an external network and gained the user privilege and the kernel privilege of a virtual machine connected to the external network will attempt to gain access to the functions of other virtual machines. Accordingly, an anomaly in the software of the monitor of the second virtual machine can be detected from the monitor of the first virtual machine, which is not connected to the external network and therefore has a lower risk of being tampered with, even if the monitor of the second virtual machine, which is connected to the external network and therefore has a higher risk of being tampered with, has been hijacked. Additionally, because virtual machines having vehicle control functions have a large impact on safety if tampered with and are easy targets for attackers, monitoring from the monitor of a more trusted virtual machine makes it possible to maintain safety. Alternatively, a virtual machine having vehicle control functions is isolated from the external network, and it can be assumed that secure design and implementation have been taken into account sufficiently to meet the requirements of a high functional safety level. Accordingly, the virtual machine having vehicle control functions can be treated as the trusted first virtual machine. Taking only the execution privilege into account, it is necessary to monitor the monitor of the second monitoring machine, which has a high risk of being tampered with, from the execution privilege of the secure app or the hypervisor. However, the monitor of the second monitoring machine can be monitored from the monitor of the first monitoring machine, which has the same execution privilege, and thus the software that operates with the execution privilege of the secure app and the execution privilege of the hypervisor can be simplified. Furthermore, it can be assumed that an attacker who has infiltrated the system from an external network and gained the user privilege and the kernel privilege of a specific virtual machine is aiming to gain access to the functions of other virtual machines. Accordingly, by having the monitor of the first virtual machine and the second virtual machine perform mutual monitoring or cyclical monitoring, an anomaly in the specific virtual machine can be detected from the monitor of a different virtual machine even if the specific virtual machine has been hijacked.

The monitoring device may run on a secure app, a host operating system, one or more virtualization software platforms, and one or more virtual machines, or runs on one or more container virtualization platforms and two or more containers. Each of the first execution privilege, the second execution privilege, the third execution privilege, and the fourth execution privilege may be one of an execution privilege for the secure app, an execution privilege for the host operating system, an execution privilege for the virtualization software platform, a kernel execution privilege for each of the one or more virtual machines, a user execution privilege for each of the one or more virtual machines, or an execution privilege for each of the two or more containers. Two or more virtual machines may be classified as a first virtual machine or a second virtual machine in accordance with a likelihood of being tampered with by an attacker. When two or more monitors, among the four or more monitors, of virtual machines that operate with same execution privileges are present, a monitor of the first virtual machine may include software of a monitor of the second virtual machine as a monitoring target, the two or more monitors of two or more virtual machines that operate with the same execution privileges may include the monitor of the first virtual machine and the monitor of the second virtual machine, and the two or more containers may be classified as a first container or a second container in accordance with a likelihood of being tampered with by an attacker. When two or more monitors, among the monitors, of containers that operate with same execution privileges are present, a monitor of a first container may include software of a monitor of a second container as a monitoring target, and the two or more monitors that operate with the same execution privileges may include the monitor of the first container and the monitor of the second container.

Through this, it can be assumed that even if the host operating system executes and manages a plurality of virtual machines using a hypervisor, which is virtualization software platform, or when a plurality of containers are executed and managed using container virtualization infrastructure such as that according to Docker, Kubernetes, or the like, the reliability level of the virtual machines or containers will vary according to the likelihood of tampering, such as whether there is a function for connecting to an external network. Accordingly, by building a monitoring trust chain from a plurality of monitors, an anomaly can be detected from the monitor of the first virtual machine or the monitor of the first container, which have a high reliability level, even if the monitor of the second virtual machine or the second container, which have a low reliability level, has been hijacked.

Each of the three or more monitors may start monitoring the monitoring target in accordance with a timing of an occurrence of an event including at least one of a predetermined time elapsing, a predetermined time elapsing for an external network connection, a system startup, a system restart, an external network connection being established, or an external device connection.

Through this, monitoring can be implemented asynchronously and in response to events in which there is a high risk of software being tampered with, rather than using a serial monitoring method such as Secure Boot, which verifies software integrity when the system is started up, and in which a monitor whose integrity has been verified by the monitor in a pervious stage verifies the monitor in a later stage. This makes it possible to reduce the interruption time in the monitoring processing. Furthermore, the load of the monitoring processing can be flexibly distributed without placing a load on the system, by, for example, utilizing the CPU idle time for each virtual machine to perform the monitoring processing.

The monitoring device may run on an in-vehicle system, and each of the three or more monitors may start monitoring the monitoring target in accordance with a timing of an occurrence of an event including at least one of a predetermined travel time elapsing, a predetermined stopped time elapsing, a predetermined distance being traveled, a switch of a travel mode, refueling or recharging ending, vehicle diagnostics being run, or an emergency alert being issued.

Through this, asynchronous monitoring can be implemented efficiently in the in-vehicle system by monitoring the monitoring target each time an event occurs in which there is a high risk of software being tampered with.

Each of the three or more monitors may start monitoring the monitoring target in accordance with a timing of reaching at least one of a number of executions of monitoring processing by another monitor, a number of times an anomaly is determined to have occurred in monitoring processing, or a number of times no anomaly is determined to have occurred in monitoring processing.

Through this, the number of instances of monitoring processing for trusting all the monitoring results of the second monitor can be reduced to one by, for example, having the second monitor, which is the monitoring target of the first monitor, execute the same number of instances of monitoring processing as there are monitoring targets, and then having the first monitor execute the monitoring processing for the software of the second monitor. Additionally, for example, when the second monitor, which is the monitoring target of the first monitor, detects an anomaly once, the first monitor executes the monitoring processing on the software of the second monitor. This makes it possible to execute the monitoring processing only when an anomaly occurs in the monitoring target of the second monitor, which makes it possible to reduce the number of instances of the monitoring processing. Additionally, for example, when the second monitor, which is the monitoring target of the first monitor, detects a normal state five times, the first monitor executes the monitoring processing on the software of the second monitor once. This makes it possible to reduce the monitoring processing of the first monitor, and reduce the number of instances of the monitoring processing. This can be assumed to be a case where it is necessary to switch the execution mode to operate the software with a higher execution privilege, which makes it possible to reduce overhead by reducing the number of times the execution mode is switched.

When the monitoring target is the software, each of the three or more monitors may: obtain, as an obtained value, at least one piece of information among a hash value, a mask value, or a replication value of the software that is the monitoring target, the information being stored in a memory or storage; compare the obtained value with an expected value that is a correct value defined in advance; determine that the software is normal when the expected value and the obtained value match; and determine that the software is anomalous when the expected value and the obtained value do not match.

The expected value and the obtained value will be different if the software has been tampered with, making it possible to determine whether the software has been tampered with. Using hash values makes it possible to determine tampering more efficiently than when using replication values, and using mask values makes it possible to determine tampering more efficiently than when using replication values. Meanwhile, using replication values makes it possible to determine tampering more accurately than when using hash values, and using mask values makes it possible to determine tampering more accurately than when using hash values.

The software may include at least one combination among a combination of a program and a configuration file of the virtualization software platform, a combination of a kernel program and a configuration file of each of the virtual machines, a combination of a program and a configuration file of a user app running on each of the virtual machines, or a combination of a program and a configuration file of each of the three or more monitors.

This makes it possible to determine whether software related to the monitors of the hypervisor, the virtual machines, and the user apps has been tampered with.

When the monitoring target is the communication log, each of the three or more monitors may: obtain the communication log; verify the communication log using at least one of an allow list, a deny list, or statistical information for a normal situation; and performs at least one determination among (i) a first determination of determining that the communication log is normal when the communication log is included in the allow list, and determining that the communication log is anomalous when the communication log is not included in the allow list, (ii) a second determination of determining that the communication log is normal when the communication log is not included in the deny list, and determining that the communication log is anomalous when the communication log is included in the deny list, or (iii) a third determination of determining that the communication log is normal when the communication log does not deviate from the statistical information for a normal situation, and determining that the communication log is anomalous when the communication log deviates from the statistical information for a normal situation.

When anomalous communication has been transmitted or received, the communication is not included in the allow list, is included in the deny list, and deviates from the statistical information for normal situations, which makes it possible to determine anomalous communication. Furthermore, information on the source and destination of the anomalous communication can be obtained, making it possible to ascertain that the source software is likely to have been tampered with and the destination software is likely to be the target of the next attack.

The communication log may include at least one of Ethernet, a CAN protocol, a FlexRay protocol, a SOME/IP protocol, a SOME/IP-SD protocol, a system call, or a hypercall.

Taking the network protocol used in the in-vehicle system as the monitoring target makes it possible to determine communication anomalies using parameters specific to the protocol. Furthermore, the source and destination can be obtained from a communication log determined to be anomalous, making it possible to specify monitors, monitoring targets, and the like where an anomaly may occur. Further still, by taking a system call, a hypercall, or the like, which are privileged instructions, as monitoring targets, anomalies occurring at the boundaries of the execution privilege can be determined, making it possible to specify monitors, monitoring targets, and the like where an anomaly may occur.

Each of the three or more monitors may change at least one of a monitoring frequency of the monitoring target, a verification method of the monitoring target, or a selection method of the monitoring target in accordance with a priority set for each of monitoring targets that are the monitoring target.

This makes it possible to assume that the possibility of tampering and the magnitude of the effect in the event of tampering will differ for each monitoring target. Accordingly, a monitoring target having a high risk of tampering can be monitored selectively with limited resources by setting appropriate priorities for each monitoring target.

The priority may be set in accordance with at least one of an execution privilege of the monitoring target, whether one monitor among the three or more monitors or the virtual machine on which the monitor operates has a function for connecting to an external network, or whether the one monitor or the virtual machine on which the monitor operates has a vehicle control function.

Through this, it can be assumed that software running with a strong execution privilege is implemented using a simple algorithm so as not to contain vulnerabilities. Accordingly, the priority can be set lower because the likelihood of tampering is lower. Furthermore, because a virtual machine not connected to an external network, a trusted virtual machine having vehicle control functions, and the like are unlikely to be tampered with, the priority can be set lower.

The monitoring device may further include a manager that changes at least one of the priority included in monitoring information, or a monitoring configuration that is a combination of a monitoring entity included in the monitoring target and the monitoring target, in accordance with a state of a system in which the monitoring device operates or in accordance with an event.

Through this, it can be assumed that, when the importance of the monitoring target differs depending on the system state or events, it is difficult to set the monitoring information to an appropriate fixed value. Accordingly, by flexibly changing the monitoring information and the monitoring configuration, effective monitoring can be performed even after system startup. For example, flexibly changing the priority, and changing the monitoring frequency, the monitoring accuracy, and the monitoring means for the monitoring target according to the priority, makes it possible to selectively monitor a monitoring target having a high risk of tampering with limited resources. Additionally, when some monitors have become inoperable due to a single virtual machine restarting or the like, changing the monitoring information such that another monitor takes over the monitoring of the inoperable monitoring target makes it possible to continuously monitor the monitoring target. Additionally, for example, when a single virtual machine is determined to be anomalous, having another monitor take over the monitoring of the monitoring target makes it possible to monitor the monitoring target from a trusted monitor. Additionally, for example, when a single virtual machine is determined to be anomalous, having another monitor additionally monitor the monitoring target makes it possible to strengthen the monitoring by using a plurality of monitors. Additionally, for example, when the CPU or memory resources of a single virtual machine are being pushed to their limit, having another monitor take over the monitoring of the monitoring target makes it possible to reduce the impact on the system caused by the resources being limited.

The manager may change the priority in accordance with at least one of whether an external network connection is established, whether an external network connection establishment event occurs, a system state of a monitoring machine, a monitoring result from each of the monitors, an execution privilege of a monitor that has detected an anomaly, an execution privilege of software that has detected an anomaly, or a destination or a source of a communication log in which an anomaly is detected.

States pertaining to the network connection affect the likelihood of an attack, and thus the priority can be changed according to changes in the likelihood of the monitoring target being attacked. Furthermore, when a software anomaly is determined, it can be assumed that there is a high likelihood of an attack on the software in the same virtual machine as the anomalous software, software operating with the same execution privilege, and the software of the monitor that determined the anomaly. The priority can therefore be changed according to changes in the likelihood of an attack. Furthermore, when a communication anomaly is determined, it is likely that an anomaly has occurred at the source of the communication and an attack is likely to extend to the destination of the communication. The priority can therefore be changed according to changes in the likelihood of an attack.

The monitoring device may run on an in-vehicle system. The manager may change the priority of a monitoring target operating on a virtual machine having a function for controlling a vehicle, in accordance with a travel state of the vehicle. The travel state of the vehicle may be one of being stopped, manual driving, advanced driving assistance, or automated driving.

Through this, it can be assumed that during automated driving, advanced driver assistance, or the like, control commands pertaining to the travel, turning, and stopping of the vehicle are transmitted from the software of the control virtual machine that has the vehicle control functions, and the control ECU that controls the engine, steering, brakes, and the like follows the control commands. Accordingly, because the impact of tampering with the software is high, the monitoring can be performed selectively by raising the priority of the software of the control virtual machine that has the vehicle control functions. On the other hand, it can be assumed that when the vehicle is stopped or during manual driving, the control ECU is not following control commands. Accordingly, because the impact of tampering with the software is low, reducing the priority of monitoring the software of the control virtual machine that has the vehicle control functions makes it possible to prioritize the monitoring processing for other monitoring targets.

The manager may change the monitoring configuration such that a monitoring trust chain can be constructed in which software of a monitor having a low reliability level is monitored by a monitor having a higher reliability level than the monitor having the low reliability level, even after the monitoring configuration has been changed.

Through this, even if the monitoring configuration is changed, the software of a monitor having a weak execution privilege can be monitored from a monitor having a strong execution privilege, and the software of a monitor in a virtual machine highly likely to be tampered with can be monitored from a monitor in a virtual machine unlikely to be tampered with. Accordingly, an anomaly can be determined even if one of the monitors having a weak execution privilege has been hijacked.

The manager may change the monitoring configuration in accordance with at least one of whether an external network connection is established, whether an external network connection establishment event occurs, a system state of each virtual machine, a monitoring result from each of the monitors, an execution privilege of a monitor that has detected an anomaly, an execution privilege of software that has detected an anomaly, or a destination or a source of a communication log in which an anomaly is detected.

States pertaining to the network connection affect the likelihood of an attack, and thus the monitoring configuration can be changed according to changes in the likelihood of the monitoring target being attacked. Additionally, when some monitors have become disabled due to a single virtual machine restarting or the like, having another monitor take over the monitoring of the disabled monitoring target makes it possible to continuously monitor the monitoring target. Furthermore, when a single virtual machine is determined to be anomalous, having another monitor take over the monitoring of the monitoring target makes it possible to monitor the monitoring target from a trusted monitor. Further still, when a single virtual machine is determined to be anomalous, having another monitor additionally monitor the monitoring target makes it possible to strengthen the monitoring by using a plurality of monitors. Further still, when the CPU or memory resources of a single virtual machine are being pushed to their limit, having another monitor take over the monitoring of the monitoring target makes it possible to reduce the impact on the system caused by the resources being limited.

The monitoring device may run on an in-vehicle system. The manager may change the monitoring configuration related to a virtual machine having a function for controlling a vehicle, in accordance with a travel state of the vehicle. The travel state of the vehicle may be one of being stopped, manual driving, advanced driving assistance, or automated driving.

Through this, it can be assumed that during automated driving, advanced driver assistance, or the like, control commands pertaining to the travel, turning, and stopping of the vehicle are transmitted from the software of the control virtual machine that has the vehicle control functions, and the control ECU that controls the engine, steering, brakes, and the like follows the control commands. Accordingly, because the impact of tampering with the software is high, the monitoring configuration can be changed such that the software of the control virtual machine is monitored by a plurality of monitors. It can be assumed that when the vehicle is stopped or during manual driving, the control ECU is not following control commands. Accordingly, because the impact of tampering with the software is low, normal monitoring at a low load can be implemented by only a single monitor.

The manager may change the monitoring configuration using at least one of (i) selecting one of two or more predefined monitoring configurations, (ii) storing the monitoring configuration as a directed graph that takes the two or more monitors as vertices, a monitoring entity as a starting point of a path, and a monitoring target as an ending point of the path, and reconstructing the directed graph using a predetermined algorithm, or (iii) storing the monitoring configuration as a tree structure that takes the two or more monitors as nodes, the monitoring entity as a parent node, and the monitoring target as a child node, and reconstructing the tree structure using a predetermined algorithm.

This makes it possible to change to an appropriate monitoring configuration according to the current system status and events, from among a plurality of monitoring configuration patterns. Additionally, holding the monitoring configurations in a directed graph data structure makes it possible to recalculate the monitoring configuration such that at least one monitor can monitor the monitoring target, in the event that some monitors have been disabled, an anomaly has been determined in some monitors, or the like. Additionally, the manager is a monitoring device that changes the monitoring configuration by storing the monitoring configuration as a tree structure with a monitor as a node, the monitoring entity as a parent node, and the monitoring target as a child node, and then reconstructing the tree structure using a predetermined algorithm. Additionally, holding the monitoring configurations in a data structure having a tree structure makes it possible to recalculate the monitoring configuration such that at least one monitor can monitor the monitoring target, in the event that some monitors have been disabled, an anomaly has been determined in some monitors, or the like.

The monitoring device may further include a monitoring server communicator that notifies the monitoring server of a monitoring resu lt.

Through this, a security analyst can be notified of the monitoring result via the monitoring server, and can therefore consider taking countermeasures such as updating the software when an anomaly occurs.

A monitoring system according to one aspect of the present disclosure includes a monitoring device and a monitoring server. The monitoring device includes: three or more monitors that each monitor at least one of software and a communication log as a monitoring target; and a monitoring server communicator that transmits at least two of a monitor identifier, a monitoring target identifier, a normal determination time, and an anomaly determination time to the monitoring server as a monitoring result. The three or more monitors include a first monitor, a second monitor, and a third monitor. The first monitor operates with a first execution privilege, the second monitor operates with a second execution privilege that has a lower reliability level than that of the first execution privilege, and the third monitor operates with a third execution privilege that has a same reliability level as that of the second execution privilege or has a lower reliability level than that of the second execution privilege. The first monitor monitors software of the second monitor, at least one of the first monitor or the second monitor monitors software of the third monitor, and the monitoring server includes a monitoring result display that receives the monitoring result and displays the monitoring result in a graphical user interface.

Through this, a security analyst can visually ascertain the monitoring result and can therefore quickly consider taking countermeasures such as updating the software when an anomaly occurs.

The monitoring result display may display the monitoring result in the graphical user interface using at least one of (i) displaying the monitoring result in association with a system architecture and highlighting a monitor in which an anomaly is detected or a monitoring target in which an anomaly is detected, or (ii) displaying the monitoring result in association with a predetermined timeline and highlighting the normal determination time or the anomaly determination time.

Through this, a security analyst can intuitively ascertain the location of the monitor, the location of the monitoring target, and the monitoring result, and can therefore more quickly consider taking countermeasures such as updating the software when an anomaly occurs. Additionally, the security analyst can intuitively ascertain the timeline of the monitoring result and can therefore more quickly consider taking countermeasures such as updating the software when an anomaly occurs.

The monitoring server may further include a monitoring information changer that accepts a change to at least one piece of monitoring information among the monitoring target, a monitor that monitors the monitoring target, a priority of the monitoring target, and a monitoring method corresponding to the priority, and makes a request to the monitoring device to make the change. The monitoring device may further include a monitoring information updater that updates the monitoring information in response to the request from the monitoring information changer.

Through this, if, as a result of analyzing the monitoring result, the security analyst determines that it is necessary to modify the monitoring target, the monitors, the priorities, the monitoring method for each priority, or the like, they can quickly apply the modifications to the system.

A monitoring method according to one aspect of the present disclosure is a monitoring method executed by a monitoring device including three or more monitors. The three or more monitors include a first monitor, a second monitor, and a third monitor. The first monitor operates with a first execution privilege, the second monitor operates with a second execution privilege that has a lower reliability level than that of the first execution privilege, and the third monitor operates with a third execution privilege that has a same reliability level as that of the second execution privilege or has a lower reliability level than that of the second execution privilege. The monitoring method includes: monitoring software of the second monitor by the first monitor; and monitoring software of the third monitor by at least one of the first monitor or the second monitor.

Through this, it can be assumed that an attacker who has infiltrated the system will aim to gain the stronger second execution privilege and the first execution privilege after gaining the weaker third execution privilege. Accordingly, an anomaly in the software of the third monitor can be detected from the first monitor or the second monitor even if the attacker attempts to bypass the monitoring by tampering with the software of the third monitor after gaining the third execution privilege, which is weaker than the second execution privilege. Additionally, it can be assumed that environments where programs are run with a strong execution privilege are isolated from environments where programs are run with a weak execution privilege. Accordingly, using three levels of monitors having different execution privileges makes it possible to monitor a wide range of monitoring targets throughout the three types of environments. Furthermore, it can be assumed that software running with a strong execution privilege is implemented with simple algorithms so as not to contain vulnerabilities. Accordingly, simple algorithms can be used for monitors operating with a strong execution privilege, while advanced and complex algorithms can be used for monitors operating with a weak execution privilege.

Note that these comprehensive or specific aspects may be realized by a system, a method, an integrated circuit, a computer program, or a computer-readable recording medium such as a CD-ROM, or may be implemented by any desired combination of systems, devices, methods, integrated circuits, computer programs, and recording media.

A monitoring device according to an embodiment will be described hereinafter with reference to the drawings. Each of the following embodiments describes a specific example of the present disclosure. As such, the numerical values, constituent elements, arrangements and connection states of constituent elements, steps serving as elements of processing, orders of steps, and the like in the following embodiments are merely examples, and are not intended to limit the present disclosure. Additionally, of the constituent elements in the following embodiments, constituent elements not denoted in the independent claims are considered to be optional constituent elements. Additionally, the drawings are schematic diagrams, and are not necessarily exact illustrations.

### Embodiment

### Overall Block Diagram of Monitoring System

FIG. 1 is an overall block diagram illustrating a monitoring system according to an embodiment.

The monitoring system includes monitoring server 10 and in-vehicle system 20. Monitoring server 10 and in-vehicle system 20 are connected over external network 30.

External network 30 is the Internet, for example. The communication method of external network 30 may be wired or wireless. The wireless communication method may be Wi-Fi (registered trademark), 3G/LTE (Long Term Evolution), Bluetooth (registered trademark), a V2X communication method, or the like, which are existing technologies.

Monitoring server 10 is a device that obtains a monitoring result, which is information about the security state of in-vehicle system 20, from in-vehicle system 20, and displays the monitoring result using a graphical user interface. Monitoring server 10 is used, for example, at a security operation center when a security analyst checks the monitoring result and considers countermeasures, such as software updates, to be taken if an anomaly has occurred in in-vehicle system 20.

In-vehicle system 20 is a device that controls communication, controls the vehicle, and outputs video, monitors the security state of in-vehicle system 20, and notifies monitoring server 10 of the security state monitoring result. Although only one in-vehicle system 20 is illustrated in FIG. 1, each of one or more in-vehicle systems 20 transmits the security state monitoring result to monitoring server 10. In-vehicle system 20 will be described in detail below.

### Overall Block Diagram of In-Vehicle System 20

FIG. 2 is a block diagram illustrating the in-vehicle system according to the embodiment.

In-vehicle system 20 includes integrated ECU 200, gateway ECU 300, steering ECU 400a, brake ECU 400b, Zone ECU 500, front camera ECU 600a, and rear camera ECU 600b.

Integrated ECU 200 is connected to gateway ECU 300 over CAN 40, which is a Control Area Network (CAN), i.e., a type of network protocol. The network protocol used here is not limited to CAN, and may be another network protocol used in in-vehicle systems such as CAN-FD, the FlexRay protocol, or the like.

Gateway ECU 300, steering ECU 400a, and brake ECU 400b are connected over CAN 41.

Integrated ECU 200 is connected to Zone ECU 500 via Ethernet 50, which is an Ethernet (registered trademark) protocol, i.e., a type of network protocol. Ethernet 50 is, for example, the Scalable Service-Oriented MiddlewarE over IP (SOME/IP) protocol. The network protocol used here need not be SOME/IP, and may be another network protocol used in in-vehicle systems, such as SOME/IP-SD, CAN-XL, or the like.

Zone ECU 500, front camera ECU 600a, and rear camera ECU 600b are connected via Ethernet 51. Ethernet 51 may be the same network protocol as Ethernet 50, or may be a different network protocol.

Integrated ECU 200 and monitoring server 10 are connected over external network 30.

Integrated ECU 200 is an ECU that performs communication control to transmit and receive messages over external network 30, CAN 40, and Ethernet 50, vehicle control to instruct gateway ECU 300 and Zone ECU 500 to control the vehicle over CAN 40 and Ethernet 50, and video output to an infotainment system, an instrument panel, and the like. Integrated ECU 200 is an ECU that monitors the security state of integrated ECU 200 and communicates a monitoring result to monitoring server 10. Details of integrated ECU 200 will be given below.

Gateway ECU 300 is an ECU that mediates messages transmitted and received among integrated ECU 200, steering ECU 400a, and brake ECU 400b.

Steering ECU 400a is an ECU that controls the steering of a steering wheel installed in the vehicle.

Brake ECU 400b is an ECU that controls the brakes installed in the vehicle.

In addition to steering ECU 400a and brake ECU 400b, in-vehicle system 20 uses ECUs that control the engine and body of the vehicle to implement control such as causing the vehicle to travel, turn, and stop.

Zone ECU 500 is an ECU that mediates messages transmitted and received between integrated ECU 200, and front camera ECU 600a and rear camera ECU 600b.

Front camera ECU 600a is an ECU that is mounted at the front of the vehicle and obtains images from a camera that takes pictures of the area in front of the vehicle.

Rear camera ECU 600b is an ECU that is mounted at the rear of the vehicle and obtains images from a camera that takes pictures of the area to the rear of the vehicle.

Although only the front camera ECU and the rear camera ECU are illustrated in FIG. 2, advanced driving support functions such as automated driving, adaptive cruise control, and automated parking are realized using ECUs that collect information from various sensors, such as GPS.

### Block Diagram of Integrated ECU

FIG. 3 is a diagram illustrating the configuration of integrated ECU 200 according to the embodiment. Integrated ECU 200 includes external app A100, control app A200, video app A300, external virtual machine VM100, control virtual machine VM200, video virtual machine VM300, hypervisor HV100, secure app SA100, and secure operating system SOS100. In the following, external app A100, control app A200, and video app A300 will sometimes be collectively referred to as applications. External virtual machine VM100, control virtual machine VM200, and video virtual machine VM300 will sometimes be collectively referred to as virtual machines. Integrated ECU 200 is an example of a monitoring device.

Hypervisor HV100 is a virtualization software platform, such as a hypervisor, and is software that runs and manages one or more virtual machines. In general, hypervisors are distinguished between bare-metal hypervisors, called Type 1, and hosted hypervisors, called Type 2. In embedded systems, Type 1 is generally used in consideration of overhead for the processing by the hypervisor. Type 1 hypervisors are less likely to contain vulnerabilities due to their smaller code size, and can be assumed to be more trustworthy than applications, virtual machines, or the like.

Although the embodiment will describe an example of the virtualization system being implemented by a Type 1 hypervisor, the virtualization system may also be implemented by a Type 2 hypervisor or by a containerized virtualization application.

Secure operating system SOS100 is a trusted operating system implemented so as not to contain any vulnerabilities. Furthermore, because the operating system software is verified from the Root Of Trust, which is trusted hardware, at system startup, the operating system software can be assumed to be the most trusted of the applications, virtual machines, and hypervisor HV100. Secure operating system SOS100 is implemented, for example, using control of an execution environment called a Trusted Execution Environment (TEE). Secure operating system SOS100 can be implemented, for example, by the TrustZone mechanism, which is one of the standard functions in the Cortex-A family of ARM-based central processing units (CPUs). Secure operating system SOS100 can also be implemented by Apple's Secure Enclave Processor (SEP), Google's TitanM, or the like.

Secure app SA100 is a trusted application implemented so as not to contain vulnerabilities. Secure app SA100 runs on the trusted secure operating system SOS100 and can therefore be assumed to be more trustworthy than the applications, virtual machines, and hypervisor HV100. On the other hand, secure app SA100 is required to be implemented without vulnerabilities, and it is therefore necessary for the program of secure app SA100 to be simple.

External app A100 is an application that communicates with monitoring server 10 over external network 30. External app A100 is connected to external network 30, which can be an entry point for attackers, and can therefore be assumed to be more vulnerable than control app A200 and video app A300, which are not connected to external network 30.

External virtual machine VM100 is an operating system that runs external app A100. External virtual machine VM100 runs external app A100, which can be an entry point for attackers, and can therefore be assumed to be more vulnerable than control virtual machine VM200 and video virtual machine VM300.

Control app A200 is an application that communicates with gateway ECU 300 over CAN 40 and controls operations related to the travel of a vehicle provided with in-vehicle system 20. Control app A200 is not connected to external network 30, and can therefore be assumed to be more reliable than external app A100. Furthermore, control app A200 is designed and implemented securely in order to apply functional safety standards in software development related to the control of operations related to vehicle travel. Accordingly, control app A200 can be assumed to be more trustworthy than external app A100. However, it can be assumed that control app A200, if hijacked, would have a significant impact on the operations related to the travel of the vehicle because the attacker can use the function for controlling the operations related to the travel of the vehicle.

Control virtual machine VM200 is an operating system that runs control app A200. Control virtual machine VM200 is not connected to external network 30, and can therefore be assumed to be unlikely as a possible entry point for an attacker. Furthermore, control virtual machine VM200 is designed and implemented securely in order to apply functional safety standards in software development related to the control of operations related to vehicle travel. Therefore, control virtual machine VM200 can be assumed to be more trustworthy than external app A100 or external virtual machine VM100. However, if control virtual machine VM200 were hijacked, the attacker could use the functions for controlling operations related to the travel of the vehicle, and it can therefore be assumed that the impact thereof would be greater than if external virtual machine VM100 or video virtual machine VM300 were hijacked.

Video app A300 is an application that communicates with Zone ECU 500 over Ethernet 50, obtains camera images and the like, and outputs the images to the infotainment system, the instrument panel, and a heads-up display. The camera images are also used as information for implementing advanced driving support functions such as automated driving and the like. Video app A300 is not connected to external network 30, and is therefore less likely to be an entry point for attackers and can therefore be assumed to be more trustworthy than external app A100. In addition, even if video app A300 is hijacked, the attacker will not be able to use functions for controlling operations related to vehicle travel, and it can therefore be assumed that the impact on operations related to vehicle travel will be smaller than if control virtual machine VM200 were hijacked.

Video virtual machine VM300 is an operating system that runs video app A300. Video virtual machine VM300 is not connected to external network 30, and is therefore less likely to be an entry point for attackers and can therefore be assumed to be more trustworthy than external app A100. In addition, even if video virtual machine VM300 were hijacked, the attacker will not be able to use functions for controlling operations related to vehicle travel, and it can therefore be assumed that the impact on operations related to vehicle travel will be smaller than if control virtual machine VM200 were hijacked.

The execution privilege of each program will be described here. In general, the CPU can assign a plurality of privilege levels to each program. This corresponds to, for example, the Exception Level (EL) in ARM-based CPUs and Protection Ring in Intel-based CPUs. Furthermore, the CPU can execute programs securely by using TEE to control two types of execution environments, namely secure world and normal world. Generally, five types of execution privileges are used, depending on the privilege level and the two types of execution environment control. In the embodiment, the strongest secure execution privilege (PL4) is assigned to secure operating system SOS100; the next-strongest secure execution privilege (PL3) is assigned to applications on the operating system (i.e., secure app SA100); the next-strongest execution privilege (PL2) is assigned to hypervisor HV100; the next-strongest execution privilege (PL1) is assigned to the virtual machines (i.e., external virtual machine VM100, control virtual machine VM200, and video virtual machine VM300); and the weakest execution privilege (PL0) is assigned to the applications on the virtual machines (i.e., external app A100, control app A200, and video app A300). In addition, it is basically difficult for software operating with strong execution privilege to be tampered with from a program operating with weak execution privilege. However, even when the execution privilege is strong, software may be tampered with due to vulnerabilities or design flaws, and thus software that operates with strong execution privilege is required to be a simple program.

As described above, external app A100 is most likely to be tampered with and therefore has the lowest reliability level, and control app A200, video app A300, external virtual machine VM100, control virtual machine VM200, video virtual machine VM300, hypervisor HV100, secure app SA100, and secure operating system SOS100 are less likely to be tampered with, in that order. A low likelihood of tampering means the reliability level is high.

An attack scenario by an attacker will be described next. The attacker exploits a vulnerability in external app A100 to gain a user privilege by infiltrating external virtual machine VM100 from external network 30. The attacker then gains a kernel privilege of external virtual machine VM100 by exploiting vulnerabilities such as system calls in external virtual machine VM100. Then, by exploiting a vulnerability in hypervisor HV100, such as a hypercall, the attacker gains the privilege of hypervisor HV100, or of control virtual machine VM200 or video virtual machine VM300. Here, a hypercall is, for example, internal communication between virtual machines and a privileged instruction that instructs the startup or termination of a virtual machine.

In the attack scenario described above, it is assumed that security countermeasure mechanisms are in place in each of the applications, virtual machines, hypervisor HV100, and secure app SA100 to accurately capture the attacker's behavior. The security countermeasure mechanisms include application monitors, virtual machine monitors, HV monitor HV110, and SA monitor SA110, which will be described later.

Although not shown in FIG. 3, integrated ECU 200 has functions to manage fuel, the power supply state, and the refueling state, functions to issue emergency alerts in the event of system anomalies such as accidents, functions to control vehicle diagnostics, and functions to monitor external device connections.

### Details of Block Diagram of Integrated ECU

FIG. 4 is a block diagram illustrating the integrated ECU according to the embodiment in detail.

External app A100 includes app monitor A110 that monitors external communication and app region software; control app A200 includes app monitor A210 that monitors CAN communication and app region software; and video app A300 includes app monitor A310 that monitors Ethernet communication and app region software. The app region software is software in a user region. Hereafter, app monitor A110, app monitor A210, and app monitor A310 may be referred to collectively as application monitors. Additionally, external virtual machine VM100 includes VM monitor VM110 that monitors system calls, hypercalls, software in a VM region (also called an OS region or a kernel region), and app region software; control virtual machine VM200 includes VM monitor VM210 that monitors system calls, hypercalls, software in a VM region (also called an OS region or a kernel region), and app region software; and video virtual machine VM300 includes VM monitor VM310 that monitors system calls, hypercalls, software in the VM region (also called an OS region or a kernel region), and app region software. VM monitor VM110, VM monitor VM210, and VM monitor VM310 may be collectively referred to as virtual machine monitors hereinafter. Hypervisor HV100 also includes HV monitor HV110 that monitors HV region software and VM region software. Secure app SA100 includes SA monitor SA110 that monitors HV region software and VM region software, and manager SA120 that manages the monitoring information. The application monitors, the virtual machine monitors, HV monitor HV110, and SA monitor SA110 may be collectively referred to as a multilayer monitor hereinafter. The monitoring information will be described in detail later. The applications, the application monitors, the virtual machines, the virtual machine monitors, hypervisor HV100, HV monitor HV110, secure app SA100, and SA monitor SA110 will be described in detail later.

Thus, in order to accurately capture the behavior of an attacker, integrated ECU 200 is assumed with a configuration which introduces the application monitors, the virtual machine monitors, HV monitor HV110, and SA monitor SA110, which are the security countermeasure mechanisms for the applications, virtual machines, hypervisor HV100, and secure app SA100. However, an attacker can disable the security countermeasure mechanisms by tampering with the software of the security countermeasure mechanisms executed under the execution privilege which the attacker has gained, and thus simply introducing security countermeasure mechanisms is not sufficient.

It is assumed that all security countermeasure mechanisms are implemented in secure app SA100 and secure operating system SOS100, in which the security countermeasure mechanisms are less likely to be tampered with, but as mentioned above, simple programs that do not contain vulnerabilities are required, and thus if complex algorithms are required for the security countermeasure mechanisms, it is difficult to implement all the security countermeasure mechanisms. For example, it may not be possible to implement communication log accumulation processing, statistical processing, and machine learning processing used to detect network anomalies in secure app SA100 or secure operating system SOS100. The storage regions and memory regions which can be accessed by secure app SA100 and secure operating system SOS100 are limited due to the execution environments being separate, and it is therefore difficult to implement the security countermeasure mechanisms if the items required by the security countermeasure mechanisms cannot be obtained. For example, it may not be possible to obtain the application software or the communication used by the application from secure app SA100 or secure operating system SOS100.

For the above two reasons, it is desirable to implement security countermeasure mechanisms for each of the applications, virtual machines, hypervisor HV100, and secure app SA100, but the risk of the security countermeasure mechanisms themselves being tampered with is an issue. Accordingly, for example, a configuration is conceivable in which SA monitor SA110 monitors the software of HV monitor HV110, HV monitor HV110 monitors the software of the virtual machine monitors, and the virtual machine monitors monitor the software of the application monitors. This makes it possible for the virtual machine monitors to detect anomalies even if the application monitors have been tampered with; for HV monitor HV110 to detect anomalies even if the software in the virtual machine monitors has been tampered with; and for SA monitor SA110 to detect anomalies even if the software in HV monitor HV110 has been tampered with. In this manner, by monitoring each monitor from at least one multilayer monitor that operates with a stronger execution privilege or a higher reliability level, anomalies can be detected from other monitors even if one monitor has been tampered with and disabled. Furthermore, the monitoring from SA monitor SA110, which is trusted software, is chained to hypervisor HV100, the virtual machines, and the applications, which makes it difficult for an attacker to bypass all the monitoring. The construction of a chain of monitoring from a monitor with a stronger execution privilege or a higher reliability level to a monitor with a weaker execution privilege or a lower reliability level in a multilayer monitor as described above will be called the construction of a trust chain for monitoring.

### Block Diagram of External App

FIG. 5 is a block diagram illustrating an external app according to the embodiment.

External app A100 includes external communicator A101, external app executor A102, app region storage A103, and app monitor A110. External communicator A101 communicates over external network 30. External app executor A102 uses external communication and system calls to obtain navigation information, obtain streaming information such as music and video, and download updated software. App region storage A103 is storage and memory for storing programs and configuration files for external apps.

App monitor A110 includes monitoring target obtainer A111, system state obtainer A112, monitor A113, monitoring information storage A114, monitoring information updater A115, and monitoring result notifier A116.

Monitoring target obtainer A111 has a function for obtaining information about the software that is a monitoring target from app region storage A103, and obtaining information about external communication logs from external communicator A101.

System state obtainer A112 has a function for obtaining an Internet connection state from external communicator A101 as a system state, and a function for obtaining a security state from monitor A113 as a system state.

Monitor A113 has a function for comparing an obtained value of the information about the software obtained by monitoring target obtainer A111 with an expected value included in the monitoring information stored by monitoring information storage A114, determining that the information about the software is anomalous when the obtained value and the expected value differ, and determining that the information about the software is normal when the obtained value and the expected value match. Furthermore, monitor A113 has a function for determining whether a specific message included in an external communication log obtained by monitoring target obtainer A111 is anomalous by using an allow list or a deny list and the statistical information for normal situations.

Monitoring information storage A114 has a function for storing the monitoring information, which includes a monitoring entity, a monitoring target, an expected value, and a priority level.

Monitoring information updater A115 has a function for updating the monitoring information in response to a request from manager SA120.

Monitoring result notifier A116 has a function for notifying manager SA120 of monitoring results and the system state.

The monitoring information will be described in detail later.

In this manner, app monitor A110 can monitor the app region software and external communication, and can obtain the Internet connection state and security state of external app A100. The monitoring of external communication is assumed to be a complex algorithm using statistical information.

### Block Diagram of Control App

FIG. 6 is a block diagram illustrating the control app according to the embodiment.

Control app A200 includes CAN communicator A201, control app executor A202, app region storage A203, and app monitor A210. CAN communicator A201 communicates with gateway ECU 300 over CAN 40. Control app executor A202 uses CAN communication and system calls to instruct VM100 to perform control related to the travel of the vehicle, such as driving, turning, stopping, and the like. App region storage A203 is storage and memory for storing programs and configuration files for the control app.

App monitor A210 includes monitoring target obtainer A211, system state obtainer A212, monitor A213, monitoring information storage A214, monitoring information updater A215, and monitoring result notifier A216.

Monitoring target obtainer A211 has a function for obtaining information about the software that is a monitoring target from app region storage A203, and obtaining information about the CAN communication log from CAN communicator A201.

System state obtainer A212 has a function for obtaining a state of the vehicle such as the travel state, the distance traveled since startup, the time passed since startup, and the like from control app executor A202 as the system state, and a function for obtaining the security state from monitor A213 as the system state.

Monitor A213 has a function for comparing an obtained value of the information about the software obtained by monitoring target obtainer A211 with an expected value included in the monitoring information stored by monitoring information storage A214, determining that the information about the software is anomalous when the obtained value and the expected value differ, and determining that the information about the software is normal when the obtained value and the expected value match. Furthermore, monitor A213 has a function for determining whether a specific message included in a CAN communication log obtained by monitoring target obtainer A211 is anomalous by using an allow list or a deny list and the statistical information for normal situations.

Monitoring information storage A214 has a function for storing the monitoring information, which includes a monitoring entity, a monitoring target, an expected value, and a priority level.

Monitoring information updater A215 has a function for updating the monitoring information in response to a request from manager SA120.

Monitoring result notifier A216 has a function for notifying manager SA120 of monitoring results and the system state.

In this manner, app monitor A210 can monitor the app region software and CAN communication, and can obtain the vehicle state and the security state of control app A200. The monitoring of CAN communication is assumed to be a complex algorithm using statistical information.

### Block Diagram of Video App

FIG. 7 is a block diagram illustrating the video app according to the embodiment.

Video app A300 includes Ethernet communicator A301, video app executor A302, app region storage A303, and app monitor A310. Ethernet communicator A301 communicates with Zone ECU 500 over Ethernet 50. Video app executor A302 uses Ethernet communication and system calls to obtain camera images and output the images to a display. App region storage A303 is storage and memory for storing programs and configuration files for the video app.

App monitor A310 includes monitoring target obtainer A311, system state obtainer A312, monitor A313, monitoring information storage A314, monitoring information updater A315, and monitoring result notifier A316.

Monitoring target obtainer A311 has a function for obtaining information about the software that is the monitoring target from app region storage A303, and obtaining information about the Ethernet communication log from Ethernet communicator A301.

System state obtainer A312 has a function for obtaining the security state from monitor A313 as the system state.

Monitor A313 has a function for comparing an obtained value of the information about the software obtained by monitoring target obtainer A311 with an expected value included in the monitoring information stored by monitoring information storage A314, determining that the information about the software is anomalous when the obtained value and the expected value differ, and determining that the information about the software is normal when the obtained value and the expected value match. Furthermore, monitor A313 has a function for determining whether a specific message included in an Ethernet communication log obtained by monitoring target obtainer A311 is anomalous by using an allow list or a deny list and the statistical information for normal situations.

Monitoring information storage A314 has a function for storing the monitoring information, which includes a monitoring entity, a monitoring target, an expected value, and a priority level.

Monitoring information updater A315 has a function for updating the monitoring information in response to a request from manager SA120.

Monitoring result notifier A316 has a function for notifying manager SA120 of monitoring results and the system state.

In this manner, app monitor A310 can monitor the app region software and Ethernet communication, and can obtain the security state of video app A300. The monitoring of Ethernet communication is assumed to be a complex algorithm using statistical information.

### Block Diagram of External Virtual Machine

FIG. 8 is a block diagram illustrating the external virtual machine according to the embodiment.

External virtual machine VM100 includes app communicator VM101, system call controller VM102, VM region storage VM103, hypercall invoker VM104, and VM monitor VM110. App communicator VM101 receives system calls from external app executor A102. System call controller VM102 executes system calls. VM region storage VM103 is storage and memory for storing programs, middleware, and configuration files of external virtual machine VM100. Hypercall invoker VM104 invokes hypercalls.

VM monitor VM110 includes monitoring target obtainer VM111, system state obtainer VM112, monitor VM113, monitoring information storage VM114, monitoring information updater VM115, and monitoring result notifier VM116.

Monitoring target obtainer VM111 has a function for obtaining information about the software that is the monitoring target from VM region storage VM103 and app region storage A103, and obtaining information about system calls from app communicator VM101.

System state obtainer VM112 has a function for obtaining the security state from monitor VM113 as the system state.

Monitor VM113 has a function for comparing an obtained value of the information about the software obtained by monitoring target obtainer VM111 with an expected value included in the monitoring information stored by monitoring information storage VM114, determining that the information about the software is anomalous when the obtained value and the expected value differ, and determining that the information about the software is normal when the obtained value and the expected value match. Furthermore, monitor VM113 has a function for determining whether a specific system call included in a system call log obtained by monitoring target obtainer VM111 is anomalous by using an allow list or a deny list, and statistical information for normal situations.

Monitoring information storage VM114 has a function for storing the monitoring information, which includes a monitoring entity, a monitoring target, an expected value, and a priority level.

Monitoring information updater VM115 has a function for updating the monitoring information in response to a request from manager SA120.

Monitoring result notifier VM116 has a function for notifying manager SA120 of monitoring results and the system state.

In this manner, VM monitor VM110 can monitor app region and VM region software and system calls, and can obtain the security state of external virtual machine VM100 and external app A100. The monitoring of system calls is assumed to be a complex algorithm using statistical information.

### Block Diagram of Control Virtual Machine

FIG. 9 is a block diagram illustrating the control virtual machine according to the embodiment.

Control virtual machine VM200 includes app communicator VM201, system call controller VM202, VM region storage VM203, hypercall invoker VM204, and VM monitor VM210. App communicator VM201 receives system calls from control app executor A202. System call controller VM202 executes system calls. VM region storage VM203 is storage and memory for storing programs, middleware, and configuration files of control virtual machine VM200. Hypercall invoker VM204 invokes hypercalls.

VM monitor VM210 includes monitoring target obtainer VM211, system state obtainer VM212, monitor VM213, monitoring information storage VM214, monitoring information updater VM215, and monitoring result notifier VM216.

Monitoring target obtainer VM211 has a function for obtaining information about the software that is the monitoring target from VM region storage VM203 and app region storage A103, a function for obtaining information about system calls from app communicator VM201, and furthermore, a function for obtaining information about hypercalls from hypercall controller HV102.

System state obtainer VM212 has a function for obtaining the security state from monitor VM213 as the system state.

Monitor VM213 has a function for comparing an obtained value of the information about the software obtained by monitoring target obtainer VM211 with an expected value included in the monitoring information stored by monitoring information storage VM214, determining that the information about the software is anomalous when the obtained value and the expected value differ, and determining that the information about the software is normal when the obtained value and the expected value match. Furthermore, monitor VM213 has a function for determining whether a specific system call included in a system call log obtained by monitoring target obtainer VM211 is anomalous by using an allow list or a deny list, and statistical information for normal situations. Furthermore, monitor VM213 has a function for determining whether a specific hypercall included in a hypercall log obtained by monitoring target obtainer VM211 is anomalous by using an allow list or a deny list, and statistical information for normal situations.

Monitoring information storage VM214 has a function for storing the monitoring information, which includes a monitoring entity, a monitoring target, an expected value, and a priority level.

Monitoring information updater VM215 has a function for updating the monitoring information in response to a request from manager SA120.

Monitoring result notifier VM216 has a function for notifying manager SA120 of monitoring results and the system state.

In this manner, VM monitor VM210 can monitor app region and VM region software, system calls, hypercalls, and can obtain the security state of control virtual machine VM200 and control app A200. The monitoring of system calls and hypercalls is assumed to be a complex algorithm using statistical information.

Although the hypercall monitoring is described here as being performed by control virtual machine VM200, this monitoring may also be performed by hypervisor HV100.

### Block Diagram of Video Virtual Machine

FIG. 10 is a block diagram illustrating the video virtual machine according to the embodiment.

Video virtual machine VM300 includes app communicator VM301, system call controller VM302, VM region storage VM303, hypercall invoker VM304, and VM monitor VM310. App communicator VM301 receives system calls from video app executor A302. System call controller VM302 executes system calls. VM region storage VM303 is storage and memory for storing programs, middleware, and configuration files of video virtual machine VM300. Hypercall invoker VM304 invokes hypercalls.

VM monitor VM310 includes monitoring target obtainer VM311, system state obtainer VM312, monitor VM313, monitoring information storage VM314, monitoring information updater VM315, and monitoring result notifier VM316.

Monitoring target obtainer VM311 has a function for obtaining information about the software that is the monitoring target from VM region storage VM303 and app region storage A303, and obtaining information about system calls from app communicator VM301.

System state obtainer VM312 has a function for obtaining the security state from monitor VM313 as the system state.

Monitor VM313 has a function for comparing an obtained value of the information about the software obtained by monitoring target obtainer VM311 with an expected value included in the monitoring information stored by monitoring information storage VM314, determining that the information about the software is anomalous when the obtained value and the expected value differ, and determining that the information about the software is normal when the obtained value and the expected value match. Furthermore, monitor VM313 has a function for determining whether a specific system call included in a system call log obtained by monitoring target obtainer VM311 is anomalous by using an allow list or a deny list, and statistical information for normal situations.

Monitoring information storage VM314 has a function for storing the monitoring information, which includes a monitoring entity, a monitoring target, an expected value, and a priority level.

Monitoring information updater VM315 has a function for updating the monitoring information in response to a request from manager SA120.

Monitoring result notifier VM316 has a function for notifying manager SA120 of monitoring results and the system state.

In this manner, VM monitor VM310 can monitor app region and VM region software and system calls, and can obtain the security state of video virtual machine VM300 and video app A300. The monitoring of system calls is assumed to be a complex algorithm using statistical information.

### Block Diagram of Hypervisor

FIG. 11 is a block diagram illustrating the hypervisor according to the embodiment.

Hypervisor HV100 includes virtual machine communicator HV101, hypercall controller HV102, HV region storage HV103, and HV monitor HV110. Virtual machine communicator HV101 receives hypercalls from hypercall invokers VM104, VM204, and VM304. Hypercall controller HV102 executes the hypercalls. HV region storage HV103 is storage and memory that stores the programs and configuration files of hypervisor HV100.

HV monitor HV110 includes monitoring target obtainer HV111, system state obtainer HV112, monitor HV113, monitoring information storage HV114, monitoring information updater HV115, and monitoring result notifier HV116.

Monitoring target obtainer HV111 has a function for obtaining information pertaining to the software that is the monitoring target from HV region storage HV103, VM region storage VM103, VM region storage VM203, and VM region storage VM303.

System state obtainer HV112 has a function for obtaining the system states, CPU utilization, memory utilization, and security states of the virtual machines from monitor HV113 as the system state.

Monitor HV113 has a function for comparing an obtained value of the information about the software obtained by monitoring target obtainer HV111 with an expected value included in the monitoring information stored by monitoring information storage HV114, determining that the information about the software is anomalous when the obtained value and the expected value differ, and determining that the information about the software is normal when the obtained value and the expected value match.

Monitoring information storage HV114 has a function for storing the monitoring information, which includes a monitoring entity, a monitoring target, an expected value, and a priority level.

Monitoring information updater HV115 has a function for updating the monitoring information in response to a request from manager SA120.

Monitoring result notifier HV116 has a function for notifying manager SA120 of monitoring results and the system state.

In this manner, HV monitor HV110 can monitor external virtual machine VM100, control virtual machine VM200, and video virtual machine VM300, as well as the HV region software, and can obtain the system states and security states of external virtual machine VM100, control virtual machine VM200, and video virtual machine VM300.

### Block Diagram of Secure App

FIG. 12 is a block diagram illustrating the secure app according to the embodiment.

Secure app SA100 includes SA monitor SA110 and manager SA120.

SA monitor SA110 includes monitoring target obtainer SA111, system state obtainer SA112, monitor SA113, monitoring information storage SA114, monitoring information updater SA115, and monitoring result notifier SA116.

Monitoring target obtainer SA111 has a function for obtaining information pertaining to the software that is the monitoring target from HV region storage HV103, VM region storage VM103, VM region storage VM203, and VM region storage VM303.

System state obtainer SA112 has a function for obtaining the security state from monitor SA113 as the system state.

Monitor SA113 has a function for comparing an obtained value of the information about the software obtained by monitoring target obtainer SA111 with an expected value included in the monitoring information stored by monitoring information storage SA114, determining that the information about the software is anomalous when the obtained value and the expected value differ, and determining that the information about the software is normal when the obtained value and the expected value match.

Monitoring information storage SA114 has a function for storing the monitoring information, which includes a monitoring entity, a monitoring target, an expected value, and a priority level.

Monitoring information updater SA115 has a function for updating the monitoring information in response to a request from manager SA120.

Monitoring result notifier SA116 has a function for notifying manager SA120 of monitoring results and the system state.

Manager SA120 includes monitoring result obtainer SA121, system state obtainer SA122, monitoring configuration storage SA123, monitoring change rule storage SA124, monitoring information changer SA125, and monitoring server communicator SA126.

Monitoring result obtainer SA121 has a function for receiving the monitoring results from monitoring result notifiers A116, A216, A316, VM116, VM216, VM316, HV116, and SA116.

System state obtainer SA122 has a function for receiving the system states from monitoring result notifiers A116, A216, A316, VM116, VM216, VM316, HV116, and SA116.

Monitoring configuration storage SA123 has a function for storing a monitoring configuration including trust chain configuration patterns of a plurality of multilayer monitors.

Monitoring change rule storage SA124 has a function for storing monitoring change rules, including rules for changing the priority and monitoring configuration included in the monitoring information in accordance with the system state.

Monitoring information changer SA125 has a function for requesting monitoring information updater SA115 to change the monitoring information.

Monitoring server communicator SA126 has a function for notifying monitoring server 10 of monitoring results, receiving, from monitoring server 10, the details of changes in the monitoring information and the monitoring configuration as well as requests for changes in the monitoring change rules, and responding to the requests.

The monitoring configuration and the monitoring change rules will be described in detail below.

In this manner, SA monitor SA110 can monitor external virtual machine VM100, control virtual machine VM200, and video virtual machine VM300, as well as the HV region software, and can obtain the security states of external virtual machine VM100, control virtual machine VM200, and video virtual machine VM300. Manager SA120 can change to the appropriate monitoring configuration and monitoring information in accordance with the system state.

### Block Diagram of Monitoring Server

FIG. 13 is a block diagram illustrating the monitoring server according to the embodiment.

Monitoring server 10 includes in-vehicle system communicator 11, monitoring result display 12, monitoring configuration changer 13, monitoring change rule changer 14, and monitoring information changer 15.

In-vehicle system communicator 11 has a function for communicating with external communicator A101 of in-vehicle system 20.

Monitoring result display 12 has a function for receiving the monitoring results from external communicator A101 of in-vehicle system 20 via in-vehicle system communicator 11 and displaying information of the monitoring results in a graphical user interface.

Monitoring configuration changer 13 accepts changes to the monitoring configuration and transmits requests for changes to monitoring server communicator SA126.

Monitoring change rule changer 14 accepts changes to the monitoring change rules and transmits requests for changes to monitoring server communicator SA126.

Monitoring information changer 15 accepts changes to the monitoring information and transmits requests for changes to monitoring server communicator SA126.

### Example of Monitoring Information

FIGS. 14 and 15 are diagrams illustrating examples of the monitoring information.

The monitoring information contains information for each of the multilayer monitor to check its own monitoring targets and conduct monitoring of software and communication logs.

In FIG. 14, the monitoring information includes a number, a monitoring entity, a monitoring target, a memory address, an expected value, and a priority. The number is used to identify the monitoring information. The monitoring entity is used to recognize the entity responsible for monitoring the monitoring target. The monitoring target is used to recognize the software and communication logs to be monitored. The memory address is used to recognize the memory address where the monitoring target is stored in order to obtain the monitoring target. The expected value is used to recognize a normal value for the information about the monitoring target. The priority is used to monitor a monitoring target having a high priority more selectively. The priority will be described in detail later.

In FIG. 14, app monitor A110 is indicated as external app monitor, app monitor A210 as control app monitor, app monitor A310 as video app monitor, VM monitor VM110 as external VM monitor, VM monitor VM210 as control VM monitor, and VM monitor VM310 as video VM monitor, and these terms will also be used hereinafter.

For example, the monitoring information in number 7 indicates that the monitoring entity is the external VM monitor, the monitoring target is VM program 1, the memory address is VM region B10, the expected value is B10, and the priority is high. This means that the external VM monitor selectively monitors VM program 1, and can determine that VM program 1 is normal if the hash value of VM program 1 stored in VM region B10 matches B10, and that VM program 1 is anomalous if the hash value does not match.

Additionally, for example, the monitoring information in number 15 indicates that the monitoring entity is the control VM monitor, the monitoring target is the hypercall log, the memory address is "-", the expected value is "-", and the priority is "-". This indicates that the control VM monitor is to monitor the hypercall log, but the memory address, expected value, and priority need not be specified.

As mentioned above, the external communication log, the CAN communication log, the Ethernet communication log, the system call log, and the hypercall log can each be determined to be anomalous using, for example, an allow list, a deny list, and statistical information for normal situations.

In this manner, by using the monitoring information, each of the multilayer monitors can check its own monitoring target and monitor the software and the communication logs. In addition, by including the software of the multilayer monitors as monitoring targets, a trust chain for the monitoring by the multilayer monitors can be established.

In FIG. 14, SA monitor SA110 monitors the software of HV monitor HV110, HV monitor HV110 monitors the software of VM monitor VM210, VM monitor VM210 monitors the software of VM monitor VM110 and VM monitor VM310, VM monitor VM110 monitors the software of app monitor A110, VM monitor VM210 monitors the software of app monitor A110, and VM monitor VM310 monitors the software of app monitor A310, and it can therefore be seen that the multilayer monitor is linked from SA monitor SA110, which is trusted, to the application monitors, and a trust chain for the monitoring is established.

FIG. 15 illustrates information for changing the software monitoring method according to the priority. In FIG. 15, the priority, a monitoring cycle (in minutes), a verification method, and a monitoring target selection method are associated with each other. One of three priorities, namely high, medium, or low, is indicated, and these are used to identify the priority. The monitoring cycle (in minutes) is used to recognize the cycle in which monitoring processing is performed on the monitoring target. The verification method is used to recognize the method for performing the monitoring processing on the monitoring target. The monitoring target selection method is used to recognize the method of selection when a plurality of monitoring targets are present.

For example, if the priority is high, the monitoring cycle (in minutes) is 1, the verification method is replication value, and the monitoring target selection method is fixed. This indicates that a fixed monitoring target is verified using replication values at one-minute intervals. "Fixed" means that all of at least one predetermined monitoring targets are monitored each time the monitoring timing defined by the monitoring cycle arrives, while replication values are verified using the raw data of the monitoring targets stored in memory.

This makes it possible to accurately monitor monitoring targets having high priority.

For example, a priority of medium indicates that the monitoring target is verified in a specific order and at 10-minute intervals using not the replication value, but a mask value which is a value obtained by masking the replication value. "Order" means selecting one or more monitoring targets one by one in a specific order each time the monitoring timing defined by the monitoring cycle arrives, and monitoring the selected monitoring targets.

Additionally, for example, a low priority indicates that the monitoring targets are verified using hash values of the replication values in random order at 100-minute intervals. "Random" means selecting one or more monitoring targets one by one at random each time the monitoring timing defined by the monitoring cycle arrives, and monitoring the selected monitoring targets.

Here, if the priority is low, the memory region may be divided into two or more blocks, and the divided blocks may be randomly selected as the monitoring targets. This makes it possible to reduce the processing load.

Instead of setting a specific monitoring cycle and immediately executing monitoring at the timing when the cycle has passed following the previous instance of monitoring, the monitoring may be executed while the CPU is idle after the timing when the cycle has passed. In this case, although the timing of monitoring is different each time, the burden on systems where real-time performance is important can be reduced.

A period in which at least one instance of monitoring is performed may also be set. In this case, the monitoring can be performed during a predetermined period while the CPU is idle.

The monitoring timing may also be defined in accordance with a specific event or the results of verifying a specific monitor. For example, the software of app monitor A110 may be monitored at the timing of an Internet connection, the software of the control virtual machine may be monitored at the timing when the travel state of the vehicle is changed to automated driving, the software of the multilayer monitor related to an anomaly may be monitored at the timing at which a security anomaly has been determined once, or the software of a linked monitor may be monitored at the timing at which a determination of normal is made twice without a security anomaly.

Additionally, when monitoring communication logs, the region containing the logs may be specified by the memory address, the allow list may be specified by the expected value, and the priority may be specified as well. In this case, the communication log monitoring method may be changed in accordance with the priority.

For example, when the priority is high, a method for detecting anomalies using payload information of all messages, which can be expected to be highly accurate, may be applied, and when the priority is low, a method of detecting anomalies using the header information of sampled messages, which can be expected to reduce the processing load, may be applied. This makes it possible to selectively monitor the communication logs in accordance with the priority.

In this manner, by changing the priority according to the monitoring target, monitoring targets having a high risk of being tampered with can be monitored selectively, while monitoring targets having a low risk of being tampered with can be monitored at a lower processing load.

### Examples of System States

FIG. 16 is a diagram illustrating an example of system states.

The system state is used by manager SA120 to ascertain the system state of integrated ECU 200. In FIG. 16, system information includes a number, a classification, a system state, and parameters. The number is used to identify the system state. The classification is used to classify the system state into one of four types, namely "network", "VM", "security", and "vehicle". The system state indicates a name of a specific system state, for example, and the parameters indicate parameters for identifying the system state.

For example, the system state in number 5 has the classification of "VM", a system state of "VM state", and parameters of "VM identifier", one of "on", "off", or "restarting", and "time". In other words, when a specific virtual machine is restarted due to a system anomaly or a software update, the parameters include an identifier that identifies the specific virtual machine, the state of the virtual machine restarting, and the time when the state was determined.

Thus, for example, if the system state in number 1 is checked, a state of whether integrated ECU 200 is connected to the Internet can be ascertained; if the system state in number 9, which is the travel state of the vehicle, is checked, the state of whether the vehicle is driving automatically can be ascertained; and if the system state in number 7 is checked, information about the software that is the monitoring target, determined to be anomalous as a result of software verification, can be ascertained.

Additionally, by collecting and referencing the system state from timers, sensors, and other functions provided in integrated ECU 200, the system state can be obtained so as to include a predetermined time elapsing, a predetermined external network connection time elapsing, a system startup, a system restart, an external network connection being established, an external device connection, a switch of a travel mode, refueling or recharging ending, vehicle diagnostics being run, and an emergency alert being issued.

Here, the system states in FIG. 16 are a list of system states and the items that should be written in the parameters. Upon obtaining a system state included in the list, manager SA120 can share the system state with other programs by communicating or logging the number and parameters to other programs.

### Examples of Monitoring Configurations

FIGS. 17 to 20 are diagrams illustrating examples of monitoring configurations.

The "monitoring configuration" is used to change the trust chain for monitoring by linking multilayer monitors. In FIGS. 17 through 20, the block at the base of an arrow indicates the monitor that performs the monitoring, and the block at the tip of the arrow indicates the monitor that is the target of the monitoring.

In FIG. 17, the monitoring configuration includes a number and a monitoring configuration. The number is used to identify the monitoring configuration, and the monitoring configuration describes the linkage pattern of the multilayer monitor.

In the monitoring configuration in number 1 FIG. 17, SA monitor SA110 monitors the software of HV monitor HV110, HV monitor HV110 monitors the software of VM monitor VM210, VM monitor VM210 monitors the software of VM monitor VM110 and VM monitor VM310, VM monitor VM110 monitors the software of app monitor A110, VM monitor VM210 monitors the software of app monitor A110, and VM monitor VM310 monitors the software of app monitor A310, and it can therefore be seen that the multilayer monitor is linked from SA monitor SA110, which is trusted, to the application monitors, and a trust chain for the monitoring is established.

Here, control virtual machine VM200 is not directly connected to an external network and can be assumed to be more trustworthy than external virtual machine VM100, and can therefore be treated as a monitor having a higher reliability level.

The monitoring configuration in number 2 in FIG. 17 is equivalent to the monitoring configuration in number 1 except that SA monitor SA110 monitors the software of VM monitor VM210 instead of HV monitor HV110. Although the processing and program complexity of SA monitor SA110 is higher than in the monitoring configuration in number 1, monitoring from the trusted SA monitor SA110 makes it possible to increase the reliability level of the software in VM monitor VM210.

The monitoring configuration in number 3 of FIG. 18 is a monitoring configuration that can maintain the trust chain monitoring even if control virtual machine VM200 has crashed. If the monitoring configuration in number 1 or number 2 were to continue when control virtual machine VM200 crashes, there would be no monitoring entity to monitor VM monitor VM110 or VM monitor VM310 as monitoring targets, making it impossible to maintain the monitoring trust chain.

The monitoring configuration in number 4 of FIG. 18 is a monitoring configuration that can maintain trust chain monitoring for all entities aside from app monitor A210 by limiting the monitoring targets of VM monitor VM210 and handing these over to HV monitor HV110, even if an anomaly is detected in control virtual machine VM200. If the monitoring configuration in number 1 or number 2 is continued when a security anomaly is detected in control virtual machine VM200, control virtual VM machine 210 will be the monitoring entity for the software of VM monitor VM110 and VM monitor VM310, but because control virtual machine VM200 is highly likely to be tampered with, the monitoring trust chain cannot be maintained.

The monitoring configuration in number 5 of FIG. 19 is a monitoring configuration that can strengthen the monitoring when an anomaly is detected in control virtual machine VM200 or when the risk of control virtual machine VM200 being tampered with is high. By verifying the software of VM monitor VM210 from both SA monitor SA110 and HV monitor HV110, the frequency and reliability of the monitoring can be increased. Here, if the two monitoring results are different, the monitoring result from SA monitor SA110, which has a higher reliability level, can be employed.

The monitoring configuration in number 6 of FIG. 19 is a monitoring configuration that, even if an anomaly is detected in control virtual machine VM200, can maintain the trust chain monitoring by completely removing VM monitor VM210 from the monitoring entities and allowing other virtual machine monitors to take over the monitoring of app monitor A110. If the monitoring configuration in number 1 or number 2 is continued when a security anomaly is detected in control virtual machine VM200, control virtual machine VM200 will be the monitoring entity for the software of VM monitor VM110 and VM monitor VM310, but because control virtual machine VM200 is highly likely to be tampered with, the monitoring trust chain cannot be maintained.

The monitoring configuration in number 7 of FIG. 20 is a monitoring configuration that can strengthen the monitoring when external virtual machine VM100 is highly likely to be tampered with, such as in an Internet connection state. By verifying the software of VM monitor VM110 from both HV monitor HV110 and VM monitor VM210, the frequency and reliability of the monitoring can be increased. Here, if the two monitoring results are different, the monitoring result from HV monitor HV110, which has a higher reliability level, can be employed.

In this manner, providing a plurality of monitoring configurations and switching the monitoring configuration according to the system state makes it possible to maintain the monitoring trust chain even when VM anomalies or security anomalies occur, which in turn makes it possible to focus on monitoring specific monitoring targets according to the system state.

Although only monitoring configurations which do not have closed circuits are illustrated in FIGS. 17 to 20, a cyclic monitoring configuration may be used in which VM monitor VM210 monitors the software of VM monitor VM310, VM monitor VM310 monitors the software of VM monitor VM110, and VM monitor VM110 monitors the software of VM monitor VM210; or a mutual monitoring configuration, in which each virtual machine monitor monitors the software of the other virtual machine monitors, may be used.

When switching from one monitoring configuration to another monitoring configuration, the monitoring configuration may be dynamically calculated and changed, rather than defining a plurality of monitoring configurations in advance and switching among the monitoring configurations. For example, the monitoring configuration can be changed by storing the monitoring configuration as a directed graph with a monitor as the vertex, the monitoring entity as the starting point of the path, and the monitoring target as the ending point of the path, and then reconstructing the directed graph using a predetermined algorithm. Additionally, for example, the monitoring configuration can be changed by storing the monitoring configuration as a tree structure with a monitor as a node, the monitoring entity as a parent node, and the monitoring target as a child node, and then reconstructing the tree structure using a predetermined algorithm.

### Examples of Monitoring Change Rules

FIG. 21 is a diagram illustrating an example of monitoring change rules.

The monitoring change rules are used by manager SA120 to change the priority and monitoring configuration of the monitoring information in accordance with the system state.

In FIG. 21, the monitoring change rules include a number, a change condition, and change processing. The number is used to identify the monitoring change rule. The change condition is used to determine if the system state is a state in which change processing is to be performed. The change processing indicates the details of the changes to the monitoring configuration that will be performed when the change condition is met.

For example, with the monitoring change rule in number 3, the change condition is the establishment of an Internet connection, and the change processing is to temporarily raise the monitoring priority for VM monitor VM110 and app monitor A110. In other words, assuming an attack in which integrated ECU 200 is connected to an unauthorized network to download unauthorized software, there is an increased likelihood of the software of VM monitor VM110 and app monitor A110 being tampered with immediately after the Internet connection is established. Accordingly, manager SA120 temporarily raises the monitoring priority for VM monitor VM110 and app monitor A110. This makes it possible to execute high-frequency, high-precision monitoring for these monitors. After a predetermined length of time has passed or predetermined monitoring processing has been completed, the priority which was temporarily raised is restored to its original value.

Additionally, for example, with the monitoring change rule in number 10, when an anomaly occurs in a specific instance of communication, the priority of the monitor that monitors the source of the anomalous communication, the monitor that monitors the destination of the anomalous communication, and the monitor that detects the anomalous communication are each raised. There is a high likelihood that an anomaly has occurred in the software at the source, an attack is likely to be made on the software at the destination, and the monitor that has detected the anomalous communication is also likely to be disabled; as such, manager SA120 raises the priority of each of the monitor that monitors the source of the anomalous communication, the monitor that monitors the destination of the anomalous communication, and the monitor that has detected the anomalous communication. This makes it possible to execute focused monitoring of these monitors. Furthermore, by manager SA120 changing the monitoring configuration, software that is highly likely to be tampered with can be monitored from a plurality of monitors.

For example, the monitoring change rule in number 6 indicates that if the CPU usage rate of a specific VM is low, the monitoring configuration is changed to a configuration in which the VM has a higher processing load. This may affect other major functions if a large amount of monitoring processing is performed in the virtual machine monitor located in a virtual machine having a high CPU usage rate. Accordingly, executing the monitoring using a virtual machine monitor running on a virtual machine having a low CPU usage rate makes it possible to reduce the burden on systems in which real-time performance is important.

In this manner, manager SA120 can change the priority and monitoring configuration according to whether an external network connection is established, the occurrence of an external network connection establishment event, the system state of the virtual machines, the monitoring results of the multilayer monitor, the execution privilege of a monitor that has detected an anomaly, the execution privilege of software that has detected an anomaly, and the destination or source of a communication log in which an anomaly has been detected.

### Examples of Display of Monitoring Result

FIGS. 22 and 23 are diagrams illustrating examples of the display of the monitoring result.

The monitoring result display is used to communicate monitoring information to a security analyst. The monitoring result display is generated by the monitoring server when monitoring server 10 receives the monitoring result from in-vehicle system 20. The monitoring result display is a display in which the monitoring result is expressed in a graphical user interface.

The monitoring result received from in-vehicle system 20 has the same items as the security classification in the system state. When the software is normal, the monitoring result includes an identifier specifying the monitor, an identifier specifying the monitoring target software, and the time when the software was determined to be normal. When the software is anomalous, the monitoring result includes an identifier specifying the monitor, an identifier specifying the monitoring target software, and the time when the software was determined to be anomalous. When the communication log is normal, the monitoring result includes an identifier specifying the monitor, an identifier specifying the communication protocol, a normal communication message, and the time when the log was determined to be normal. When the communication log is anomalous, the monitoring result includes an identifier specifying the monitor, an identifier specifying the communication protocol, a normal communication message, and the time when the log was determined to be anomalous. To identify integrated ECU 200, a vehicle ID identifying the vehicle and an ECU ID identifying the ECU may be added to the monitoring result and transmitted to monitoring server 10.

In FIG. 22, blocks having thick frames indicate monitoring target software determined to be normal, and blocks having thin frames indicate monitoring target software determined to be anomalous.

In FIG. 22, an abstracted system architecture of integrated ECU 200 is illustrated, with anomalous and normal components highlighted and indicated so as to be distinguishable from each other, and the corresponding monitoring results are shown below the components. This makes it possible for the security analyst to intuitively understand components where anomalies have occurred, which accelerates the analysis of security anomalies.

Additionally, in FIG. 22, buttons for changing the monitoring configuration and monitoring information are provided at the bottom of the graphical user interface. This enables the security analyst to quickly apply changes to in-vehicle system 20 if they discover deficiencies in the monitoring configuration or the monitoring information, a more appropriate monitoring configuration, or the like. For example, when an input to the "change monitoring configuration" button made by the security analyst is accepted, monitoring server 10 may display a graphical user interface for accepting changes to the monitoring configuration. In other words, monitoring server 10 may accept changes to at least one piece of the monitoring information among the monitoring target, the monitor that monitors the monitoring target, the priority of the monitoring target, and the monitoring method corresponding to the priority, and request integrated ECU 200 to make the change.

Meanwhile, in FIG. 23, a timeline from before and after the time when an anomaly has occurred is displayed, with the anomalous and normal components highlighted and expressed so as to be distinguishable from each other, and the linkage relationship of the multilayer monitor is expressed by arrows. This makes it possible for the security analyst to intuitively understand the timeline in which anomalies have occurred, which accelerates the analysis of security anomalies. FIG. 23 specifically indicates that at time T1, the SA monitor monitored the HV monitor; at time T2, VM monitor 1 monitored app monitor 1; and at time T3, the HV monitor monitored VM monitor 1.

### Sequence of Processing by App Monitor

FIG. 24 is a diagram illustrating a sequence of monitoring processing by the app monitor according to the embodiment.

FIG. 24 illustrates a processing sequence from when monitoring target obtainer A111 of app monitor A110 obtains the external communication log and the hash value of the app region software (SW) to when the monitoring result is communicated to monitoring result obtainer SA121. Although FIG. 24 uses external app A100 as an example, descriptions for the cases of control app A200 and video app A300 will be omitted as the processing sequence is the same aside from the types of the communication logs being different.

(S2401) Monitoring target obtainer A111 of app monitor A110 obtains the communication log, which is an external communication log, from external communicator A101, and transmits the communication log to monitor A113.

(S2402) Monitor A113 determines whether the communication log includes an anomaly and notifies monitoring result notifier A116 of the monitoring result. Here, when the software is normal, the monitoring result includes an identifier specifying the monitor, an identifier specifying the monitoring target software, and the determination time. When the software is anomalous, the monitoring result includes an identifier specifying the monitor, an identifier specifying the monitoring target software, and the determination time. When the communication is normal, the monitoring result includes an identifier specifying the monitor, an identifier specifying the communication protocol, and the determination time.

(S2403) Monitoring result notifier A116 notifies monitoring result obtainer SA121 of the monitoring result.

(S2404) Monitoring result obtainer SA121 obtains the monitoring result.

(S2405) Monitoring target obtainer A111 obtains the hash value of the software stored in app region storage A103 each time a certain time passes in accordance with the priority of the monitoring target indicated in monitoring information storage A114, obtains an expected value of the hash value of the software stored in monitoring information storage A114, and transmits the values to monitor A113.

(S2406) For each piece of software, monitor A113 determines that the software is normal if the obtained value and the expected value match, determines that the software is anomalous if the values do not match, and notifies monitoring result notifier A116 of the monitoring result.

(S2407) Monitoring result notifier A116 notifies monitoring result obtainer SA121 of the monitoring result.

(S2408) Monitoring result obtainer SA121 obtains the monitoring result.

### Sequence of Processing by Virtual Machine Monitor

FIG. 25 is a diagram illustrating a sequence of monitoring processing by the virtual machine monitor according to the embodiment.

FIG. 25 illustrates a processing sequence from when monitoring target obtainer VM211 of VM monitor VM210 obtains a system call, a hypercall, and hash values of the app region software and the VM region software, to when monitoring result obtainer SA121 is notified of the monitoring result.

Although FIG. 25 uses VM monitor VM210 as an example, descriptions for the cases of VM monitor VM110 and VM monitor VM310 will be omitted as the processing sequence is the same aside from hypercalls not being obtained.

(S2501) Monitoring target obtainer VM211 of VM monitor VM210 obtains the communication log, which is the system calls and hypercalls, respectively, from system call controller VM202 and hypercall controller HV102 of hypervisor HV100, and transmits the communication logs to monitor VM213.

(S2502) Monitor VM213 determines whether the communication log includes an anomaly and notifies monitoring result notifier VM216 of the monitoring result.

(S2503) Monitoring result notifier VM216 notifies monitoring result obtainer SA121 of the monitoring result.

(S2504) Monitoring result obtainer SA121 obtains the monitoring result.

(S2505) Monitoring target obtainer VM211 obtains the hash values of the software stored in VM region storage VM103, VM203, and VM303 each time a certain time passes in accordance with the priority of the monitoring target indicated in monitoring information storage VM214, obtains an expected value of the hash value of the software stored in monitoring information storage VM214, and transmits the values to monitor VM213.

(S2506) For each piece of software, monitor VM213 determines that the software is normal if the obtained value and the expected value match, determines that the software is anomalous if the values do not match, and notifies monitoring result notifier VM216 of the monitoring result.

(S2507) Monitoring result notifier VM216 notifies monitoring result obtainer SA121 of the monitoring result.

(S2508) Monitoring result obtainer SA121 obtains the monitoring result.

### Sequence of Processing by Hypervisor Monitor

FIG. 26 is a diagram illustrating a sequence of monitoring processing by the hypervisor according to the embodiment.

FIG. 26 illustrates a processing sequence from when monitoring target obtainer HV111 of HV monitor HV110 obtains hash values of the VM region software and the HV region software, to when monitoring result obtainer SA121 is notified of the monitoring result.

(S2601) Monitoring target obtainer HV111 of HV monitor HV110 obtains the hash values of the software stored in VM region storage VM103, VM203, and VM303 and in HV region storage HV103 each time a certain time passes in accordance with the priority of the monitoring target indicated in monitoring information storage HV114, obtains an expected value of the hash value of the software stored in monitoring information storage HV114, and transmits the values to monitor HV113.

(S2602) For each piece of software, monitor HV113 determines that the software is normal if the obtained value and the expected value match, determines that the software is anomalous if the values do not match, and notifies monitoring result notifier HV116 of the monitoring result.

(S2603) Monitoring result notifier HV116 notifies monitoring result obtainer SA121 of the monitoring result.

(S2604) Monitoring result obtainer SA121 obtains the monitoring result.

### Sequence of Processing by Secure App Monitor

FIG. 27 is a diagram illustrating a sequence of monitoring processing by the secure app according to the embodiment.

FIG. 27 illustrates a processing sequence from when monitoring target obtainer SA111 of SA monitor SA110 obtains hash values of the VM region software and the HV region software, to when monitoring result obtainer SA121 is notified of the monitoring result.

(S2701) Monitoring target obtainer SA111 of SA monitor SA110 obtains the hash values of the software stored in VM region storage VM103, VM203, and VM303 and in HV region storage HV103 each time a certain time passes in accordance with the priority of the monitoring target indicated in monitoring information storage SA114, obtains an expected value of the hash value of the software stored in monitoring information storage SA114, and transmits the values to monitor SA113.

(S2702) For each piece of software, monitor SA113 determines that the software is normal if the obtained value and the expected value match, determines that the software is anomalous if the values do not match, and notifies monitoring result notifier SA116 of the monitoring result.

(S2703) monitoring result notifier SA116 notifies monitoring result obtainer SA121 of the monitoring result.

(S2704) Monitoring result obtainer SA121 obtains the monitoring result.

### Sequence of Monitoring Server Notification Processing

FIG. 28 is a diagram illustrating a sequence of monitoring server notification processing according to the embodiment.

FIG. 28 illustrates a processing sequence from when monitoring result obtainer SA121 of SA monitor SA110 obtains the monitoring results from the application monitors, the virtual machine monitors, HV monitor HV110, and SA monitor SA110, to when monitoring result display 12 of monitoring server 10 displays the monitoring results.

(S2801) Monitoring result obtainer SA121 of SA monitor SA110 obtains the monitoring results from the application monitors, the virtual machine monitors, HV monitor HV110, and SA monitor SA110, and transmits the monitoring results to monitoring server communicator SA126.

(S2802) Monitoring server communicator SA126 notifies in-vehicle system communicator 11 of monitoring server 10 of the monitoring results via external communicator A101.

(S2803) In-vehicle system communicator 11 receives the monitoring results and transmits the monitoring results to monitoring result display 12.

(S2804) Monitoring result display 12 displays the monitoring results.

### Sequence of Monitoring Information Change Processing

FIG. 29 is a diagram illustrating a sequence of monitoring information change processing according to the embodiment.

FIG. 29 illustrates a processing sequence from when system state obtainer SA122 of SA monitor SA110 obtains the security state from the application monitors, the virtual machine monitors, HV monitor HV110, and SA monitor SA110, to when the monitoring information of the application monitors, the virtual machine monitors, HV monitor HV110, and SA monitor SA110 is updated.

(S2901) System state obtainer SA122 of SA monitor SA110 obtains, as the system state, the security state from the application monitors, the virtual machine monitors, HV monitor HV110, and SA monitor SA110, and transmits the security state to monitoring information changer SA125.

(S2902) Monitoring information changer SA125 checks the monitoring change rules stored in monitoring change rule storage SA124, and if the system state satisfies the monitoring change rule change conditions, executes the change processing and requests monitoring information updaters A115, A215, A315, VM115, VM215, VM315, HV115, and SA115 to make the change.

(S2903) Monitoring information updaters A115, A215, A315, VM115, VM215, VM315, HV115, and SA115 update the monitoring information.

Here, the monitoring information and monitoring configuration can also be changed by monitoring server 10. In this case, monitoring server communicator SA126 receives the change information from monitoring server 10 and transmits the information to monitoring information changer SA125. Then, monitoring information changer SA125 updates the configuration information contained in monitoring configuration storage SA123 and requests monitoring information updaters A115, A215, A315, VM115, VM215, VM315, HV115 and SA115 to change the monitoring information.

### Flowchart of Monitoring Processing

FIG. 30 is a flowchart for the monitoring processing according to the embodiment.

Although FIG. 30 illustrates app monitor A110 as an example, the same applies to the other application monitors, virtual machine monitors, HV monitor HV110, and SA monitor SA110, with the exception of the type of the communication log and the type of the software.

(S3001) Monitoring target obtainer A111 of app monitor A110 obtains the external communication log and software hash value that are the monitoring targets, and then performs step S3002 and step S3005.

(S3002) Monitor A113 determines whether the external communication log obtained in step S3001 contains an anomaly, performs step S3003 if so (Yes in S3002), and performs step S3004 if not (No in S3002).

(S3003) Assuming the communication of the monitoring target is anomalous, monitor A113 updates the system state and then performs step S3005.

(S3004) Assuming the communication of the monitoring target is normal, monitor A113 updates the system state and then performs step S3005.

(S3005) Monitoring result notifier A116 notifies monitoring result obtainer SA121 of the monitoring result and the system state, and then terminates the processing.

(S3006) Monitor A113 determines whether the software contains an anomaly, performs step S3007 if so (Yes in S3006), and performs step S3008 if not (No in S3006).

(S3007) Assuming the software of the monitoring target is anomalous, monitor A113 updates the system state and then performs step S3005.

(S3008) Assuming the software of the monitoring target is normal, monitor A113 updates the system state and then performs step S3005.

### Flowchart of Monitoring Change Processing

FIG. 31 is a flowchart for the monitoring change processing according to the embodiment.

(S3101) System state obtainer SA122 of manager SA120 obtains the system state, and performs step S3102.

(S3102) Monitoring information changer SA125 checks the monitoring change rule stored in monitoring change rule storage SA124, determines whether the system state obtained in step S3101 satisfies the change condition of the monitoring change rule, performs step S3103 if the change condition is satisfied (Yes in S3102), and ends the processing if the change condition is not satisfied (No in S3102).

(S3103) Monitoring information changer SA125 executes the corresponding change processing for which the change condition in the monitoring change rule is satisfied in step S3102, requests monitoring information updaters A115, A215, A315, VM115, VM215, VM315, HV115, and SA115 to change the monitoring information, and then terminates the processing.

### Effects, etc.

Integrated ECU 200 serving as a monitoring device according to the present embodiment includes three or more monitors that each monitor at least one of software and a communication log as a monitoring target. The three or more monitors include a first monitor, a second monitor, and a third monitor. The first monitor operates with a first execution privilege, the second monitor operates with a second execution privilege that has a lower reliability level than that of the first execution privilege, and the third monitor operates with a third execution privilege that has a same reliability level as that of the second execution privilege or has a lower reliability level than that of the second execution privilege. In integrated ECU 200, the first monitor monitors software of the second monitor, and at least one of the first monitor or the second monitor monitors software of the third monitor, such that a monitoring trust chain can be constructed in which software of a monitor having a low reliability level is monitored from at least one monitor having a high reliability level.

Through this, it can be assumed that an attacker who has infiltrated the system will aim to gain the stronger second execution privilege and the first execution privilege after gaining the weaker third execution privilege. Accordingly, an anomaly in the software of the third monitor can be detected from the first monitor or the second monitor even if the attacker attempts to bypass the monitoring by tampering with the software of the third monitor after gaining the third execution privilege, which is weaker than the second execution privilege. Additionally, it can be assumed that environments where programs are run with a strong execution privilege are isolated from environments where programs are run with weak execution privilege. Accordingly, using three levels of monitors having different execution privileges makes it possible to monitor a wide range of monitoring targets throughout the three types of environments. Furthermore, it can be assumed that software running with a strong execution privilege is implemented with simple algorithms so as not to contain vulnerabilities. Accordingly, simple algorithms can be used for monitors operating with a strong execution privilege, while advanced and complex algorithms can be used for monitors operating with a weak execution privilege.

Additionally, in integrated ECU 200 according to the present embodiment, the three or more monitors include four or more monitors. The four or more monitors include the first monitor, the second monitor, the third monitor, and a fourth monitor that operates with a fourth execution privilege that has a same reliability level as that of the third execution privilege or has a lower reliability level than that of the third execution privilege. In integrated ECU 200, at least one of the first monitor, the second monitor, or the third monitor monitors the software of the fourth monitor, such that a monitoring trust chain can be constructed in which software of a monitor having a low reliability level is monitored from at least one monitor having a high reliability level.

Through this, it can be assumed that an attacker who has infiltrated the system will aim to gain the stronger third execution privilege and the strong second execution privilege and the first execution privilege after gaining the weaker fourth execution privilege. Accordingly, an anomaly in the software of the fourth monitor can be detected from the first monitor, the second monitor, or the third monitor even if the attacker attempts to bypass the monitoring by tampering with the software of the fourth monitor after gaining the fourth execution privilege, which is weaker than the third execution privilege. Additionally, it can be assumed that environments where programs are run with a strong execution privilege are isolated from environments where programs are run with a weak execution privilege. Accordingly, using four levels of monitors having different execution privileges makes it possible to monitor a wide range of monitoring targets throughout the four types of environments. Furthermore, it can be assumed that software running with a strong execution privilege is implemented with simple algorithms so as not to contain vulnerabilities. Accordingly, simple algorithms can be used for monitors operating with a strong execution privilege, while advanced and complex algorithms can be used for monitors operating with a weak execution privilege.

Additionally, in integrated ECU 200 according to the present embodiment, integrated ECU 200 runs on a secure app, virtualization software platform, and one or more virtual machines. The first execution privilege is one of an execution privilege for the secure app, an execution privilege for the virtualization software platform, or a kernel execution privilege for each of the virtual machines. The second execution privilege is one of an execution privilege for the virtualization software platform, a kernel execution privilege for each of the virtual machines, or a user privilege for each of the virtual machines. The third execution privilege is one of a kernel execution privilege for each of the virtual machines or a user privilege for each of the virtual machines. The execution privilege for the secure app has a higher reliability level than that of the execution privilege for the virtualization software platform. The execution privilege for the virtualization software platform has a higher reliability level than that of the kernel execution privilege for each of the virtual machines. The kernel execution privilege for each of the virtual machines has a higher reliability level than that of the user privilege for each of the virtual machines.

Through this, it can be assumed that an attacker who has gained user privilege for a virtual machine by exploiting a vulnerability in a user app of the virtual machine will attempt to gain the kernel privilege of the virtual machine, the execution privilege of the hypervisor, and the execution privilege of the secure app. Accordingly, an anomaly in a monitor having a weaker execution privilege can be detected from a monitor having a stronger execution privilege even if, after gaining the user privilege of the virtual machine, the kernel privilege of the virtual machine, or the execution privilege of the hypervisor, the attacker attempts to bypass the monitoring by tampering with the software of the monitor operating with the execution privilege that has been gained. Additionally, it can be assumed that it is difficult to obtain software in the user space of a virtual machine, network logs in the user space of a virtual machine, and communication logs such as system calls between the user space and the kernel space of a virtual machine with the execution privilege of the secure application, the execution privilege of the hypervisor, and the like. Accordingly, separating the monitors according to an execution privilege makes it possible to monitor a wider range of monitoring targets. Furthermore, it can be assumed that software running with a secure app execution privilege, a hypervisor execution privilege, or a virtual machine kernel privilege is implemented with simple algorithms so as not to contain vulnerabilities. Accordingly, that simple algorithms can be used for monitors operating with a strong execution privilege, while advanced and complex algorithms can be used for monitors operating with a weak execution privilege.

Additionally, in integrated ECU 200 according to the present embodiment, the monitoring device runs on the virtualization software platform and two or more virtual machines. The two or more virtual machines are classified as a first virtual machine or a second virtual machine in accordance with a likelihood of being tampered with by an attacker. When two or more monitors, among the three or more monitors, that operate with an execution privilege assigned to each of the two or more virtual machines are present, a monitor of the first virtual machine includes software of a monitor of the second virtual machine as a monitoring target, and the two or more monitors that operate with the execution privilege assigned to each of the virtual machines include the monitor of the first virtual machine and the monitor of the second virtual machine.

Through this, it can be assumed that an attacker who has infiltrated the system from an external network and gained the user privilege and the kernel privilege of a virtual machine connected to the external network will attempt to gain access to the functions of other virtual machines. Accordingly, an anomaly in the software of the monitor of the second virtual machine can be detected from the monitor of the first virtual machine, which is not connected to the external network and therefore has a lower risk of being tampered with, even if the monitor of the second virtual machine, which is connected to the external network and therefore has a higher risk of being tampered with, has been hijacked. Additionally, because virtual machines having vehicle control functions have a large impact on safety if tampered with and are easy targets for attackers, monitoring from the monitor of a more trusted virtual machine makes it possible to maintain safety. Alternatively, a virtual machine having vehicle control functions is isolated from the external network, and it can be assumed that secure design and implementation have been taken into account sufficiently to meet the requirements of a high functional safety level. Accordingly, the virtual machine having vehicle control functions can be treated as the trusted first virtual machine. Taking only the execution privilege into account, it is necessary to monitor the monitor of the second monitoring machine, which has a high risk of being tampered with, from the execution privilege of the secure app or the hypervisor. However, the monitor of the second monitoring machine can be monitored from the monitor of the first monitoring machine, which has the same execution privilege, and thus the software that operates with the execution privilege of the secure app and the execution privilege of the hypervisor can be simplified. Furthermore, it can be assumed that an attacker who has infiltrated the system from an external network and gained the user privilege and the kernel privilege of a specific virtual machine is aiming to gain access to the functions of other virtual machines. Accordingly, by having the monitor of the first virtual machine and the second virtual machine perform mutual monitoring or cyclical monitoring, an anomaly in the specific virtual machine can be detected from the monitor of a different virtual machine even if the specific virtual machine has been hijacked.

Additionally, in integrated ECU 200 according to the present embodiment, each of the three or more monitors starts monitoring the monitoring target in accordance with a timing of an occurrence of an event including at least one of a predetermined time elapsing, a predetermined time elapsing for external network connection, a system startup, a system restart, an external network connection being established, or an external device connection.

Through this, monitoring can be implemented asynchronously and in response to events in which there is a high risk of software being tampered with, rather than using a serial monitoring method such as Secure Boot, which verifies software integrity when the system is started up, and in which a monitor whose integrity has been verified by the monitor in a pervious stage verifies the monitor in a later stage. This makes it possible to reduce the interruption time in the monitoring processing. Furthermore, the load of the monitoring processing can be flexibly distributed without placing a load on the system, by, for example, utilizing the CPU idle time for each virtual machine to perform the monitoring processing.

Additionally, in integrated ECU 200 according to the present embodiment, the monitoring device runs on an in-vehicle system. Each of the three or more monitors starts monitoring the monitoring target in accordance with a timing of an occurrence of an event including at least one of a predetermined travel time elapsing, a predetermined stopped time elapsing, a predetermined distance being traveled, a switch of a travel mode, refueling or recharging ending, vehicle diagnostics being run, or an emergency alert being issued.

Through this, asynchronous monitoring can be implemented efficiently in the in-vehicle system by monitoring the monitoring target each time an event occurs in which there is a high risk of software being tampered with.

Additionally, in integrated ECU 200 according to the present embodiment, each of the three or more monitors starts monitoring the monitoring target in accordance with a timing of reaching at least one of a number of executions of monitoring processing by another monitor, a number of times an anomaly is determined to have occurred in monitoring processing, or a number of times no anomaly is determined to have occurred in monitoring processing.

Through this, the number of instances of monitoring processing for trusting all the monitoring results of the second monitor can be reduced to one by, for example, having the second monitor, which is the monitoring target of the first monitor, execute the same number of instances of monitoring processing as there are monitoring targets, and then having the first monitor execute the monitoring processing for the software of the second monitor. Additionally, for example, when the second monitor, which is the monitoring target of the first monitor, detects an anomaly once, the first monitor executes the monitoring processing on the software of the second monitor. This makes it possible to execute the monitoring processing only when an anomaly occurs in the monitoring target of the second monitor, which makes it possible to reduce the number of instances of the monitoring processing. Additionally, for example, when the second monitor, which is the monitoring target of the first monitor, detects a normal state five times, the first monitor executes the monitoring processing on the software of the second monitor once. This makes it possible to reduce the monitoring processing of the first monitor, and reduce the number of instances of the monitoring processing. This can be assumed to be a case where it is necessary to switch the execution mode to operate the software with a higher execution privilege, which makes it possible to reduce overhead by reducing the number of times the execution mode is switched.

Additionally, in integrated ECU 200 according to the present embodiment, when the monitoring target is the software, each of the three or more monitors: obtains, as an obtained value, at least one piece of information among a hash value, a mask value, or a replication value of the software that is the monitoring target, the information being stored in a memory or storage; compares the obtained value with an expected value that is a correct value defined in advance; determines that the software is normal when the expected value and the obtained value match; and determines that the software is anomalous when the expected value and the obtained value do not match.

The expected value and the obtained value will be different if the software has been tampered with, making it possible to determine whether the software has been tampered with. Using hash values makes it possible to determine tampering more efficiently than when using replication values, and using mask values makes it possible to determine tampering more efficiently than when using replication values. Meanwhile, using replication values makes it possible to determine tampering more accurately than when using hash values, and using mask values makes it possible to determine tampering more accurately than when using hash values.

Additionally, in integrated ECU 200 according to the present embodiment, the software includes at least one combination among a combination of a program and a configuration file of the virtualization software platform, a combination of a kernel program and a configuration file of each of the virtual machines, a combination of a program and a configuration file of a user app running on each of the virtual machines, or a combination of a program and a configuration file of each of the three or more monitors.

This makes it possible to determine whether software related to the monitors of the hypervisor, the virtual machines, and the user apps has been tampered with.

Additionally, in integrated ECU 200 according to the present embodiment, when the monitoring target is the communication log, each of the three or more monitors may: obtain the communication log; verify the communication log using at least one of an allow list, a deny list, or statistical information for a normal situation; and performs at least one determination among (i) a first determination of determining that the communication log is normal when the communication log is included in the allow list, and determining that the communication log is anomalous when the communication log is not included in the allow list, (ii) a second determination of determining that the communication log is normal when the communication log is not included in the deny list, and determining that the communication log is anomalous when the communication log is included in the deny list, or (iii) a third determination of determining that the communication log is normal when the communication log does not deviate from the statistical information for a normal situation, and determining that the communication log is anomalous when the communication log deviates from the statistical information for a normal situation.

When anomalous communication has been transmitted or received, the communication is not included in the allow list, is included in the deny list, and deviates from the statistical information for normal situations, which makes it possible to determine anomalous communication. Furthermore, information on the source and destination of the anomalous communication can be obtained, making it possible to ascertain that the source software is likely to have been tampered with and the destination software is likely to be the target of the next attack.

Additionally, in integrated ECU 200 according to the present embodiment, the communication log may include at least one of Ethernet, a CAN protocol, a FlexRay protocol, a SOME/IP protocol, a SOME/IP-SD protocol, a system call, or a hypercall.

Taking the network protocol used in the in-vehicle system as the monitoring target makes it possible to determine communication anomalies using parameters specific to the protocol. Furthermore, the source and destination can be obtained from a communication log determined to be anomalous, making it possible to specify monitors, monitoring targets, and the like where an anomaly may occur. Further still, by taking a system call, a hypercall, or the like, which are privileged instructions, as monitoring targets, anomalies occurring at the boundaries of the execution privilege can be determined, making it possible to specify monitors, monitoring targets, and the like where an anomaly may occur.

Additionally, in integrated ECU 200 according to the present embodiment, each of the three or more monitors changes at least one of a monitoring frequency of the monitoring target, a verification method of the monitoring target, or a selection method of the monitoring target in accordance with a priority set for each of monitoring targets that are each the monitoring target.

This makes it possible to assume that the possibility of tampering and the magnitude of the effect in the event of tampering will differ for each monitoring target. Accordingly, a monitoring target having a high risk of tampering can be monitored selectively with limited resources by setting appropriate priorities for each monitoring target.

Additionally, in integrated ECU 200 according to the present embodiment, the priority is set in accordance with at least one of an execution privilege of the monitoring target, whether one monitor among the three or more monitors or the virtual machine on which the monitor operates has a function for connecting to an external network, or whether the one monitor or the virtual machine on which the monitor operates has a vehicle control function.

Through this, it can be assumed that software running with a strong execution privilege is implemented using a simple algorithm so as not to contain vulnerabilities. Accordingly, the priority can be set lower because the likelihood of tampering is lower. Furthermore, because a virtual machine not connected to an external network, a trusted virtual machine having vehicle control functions, and the like are unlikely to be tampered with, the priority can be set lower.

Additionally in integrated ECU 200 according to the present embodiment, integrated ECU 200 further includes a manager that changes at least one of the priority included in monitoring information, or a monitoring configuration that is a combination of a monitoring entity included in the monitoring target and the monitoring target, in accordance with a state of a system in which the monitoring device operates or in accordance with an event.

Through this, it can be assumed that, when the importance of the monitoring target differs depending on the system state or events, it is difficult to set the monitoring information to an appropriate fixed value. Accordingly, by flexibly changing the monitoring information and the monitoring configuration, effective monitoring can be performed even after system startup. For example, flexibly changing the priority, and changing the monitoring frequency, the monitoring accuracy, and the monitoring means for the monitoring target according to the priority, makes it possible to selectively monitor a monitoring target having a high risk of tampering with limited resources. Additionally, when some monitors have become inoperable due to a single virtual machine restarting or the like, changing the monitoring information such that another monitor takes over the monitoring of the inoperable monitoring target makes it possible to continuously monitor the monitoring target. Additionally, for example, when a single virtual machine is determined to be anomalous, having another monitor take over the monitoring of the monitoring target makes it possible to monitor the monitoring target from a trusted monitor. Additionally, for example, when a single virtual machine is determined to be anomalous, having another monitor additionally monitor the monitoring target makes it possible to strengthen the monitoring by using a plurality of monitors. Additionally, for example, when the CPU or memory resources of a single virtual machine are being pushed to their limit, having another monitor take over the monitoring of the monitoring target makes it possible to reduce the impact on the system caused by the resources being limited.

Additionally, in integrated ECU 200 according to the present embodiment, the manager changes the priority in accordance with at least one of whether an external network connection is established, whether an external network connection establishment event occurs, a system state of a monitoring machine, a monitoring result from each of the monitors, an execution privilege of a monitor that has detected an anomaly, an execution privilege of software that has detected an anomaly, or a destination or a source of a communication log in which an anomaly is detected.

States pertaining to the network connection affect the likelihood of an attack, and thus the priority can be changed according to changes in the likelihood of the monitoring target being attacked. Furthermore, when a software anomaly is determined, it can be assumed that there is a high likelihood of an attack on the software in the same virtual machine as the anomalous software, software operating with the same execution privilege, and the software of the monitor that determined the anomaly. The priority can therefore be changed according to changes in the likelihood of an attack. Furthermore, when a communication anomaly is determined, it is likely that an anomaly has occurred at the source of the communication and an attack is likely to extend to the destination of the communication. The priority can therefore be changed according to changes in the likelihood of an attack.

Additionally, in integrated ECU 200 according to the present embodiment, integrated ECU 200 runs on an in-vehicle system. The manager changes the priority of a monitoring target operating on a virtual machine having a function for controlling a vehicle, in accordance with a travel state of the vehicle. The travel state of the vehicle is one of being stopped, manual driving, advanced driving assistance, or automated driving.

Through this, it can be assumed that during automated driving, advanced driver assistance, or the like, control commands pertaining to the travel, turning, and stopping of the vehicle are transmitted from the software of the control virtual machine that has the vehicle control functions, and the control ECU that controls the engine, steering, brakes, and the like follows the control commands. Accordingly, because the impact of tampering with the software is high, the monitoring can be performed selectively by raising the priority of the software of the control virtual machine that has the vehicle control functions. On the other hand, it can be assumed that when the vehicle is stopped or during manual driving, the control ECU is not following control commands. Accordingly, because the impact of tampering with the software is low, reducing the priority of monitoring the software of the control virtual machine that has the vehicle control functions makes it possible to prioritize the monitoring processing for other monitoring targets.

Additionally, in integrated ECU 200 according to the present embodiment, the manager changes the monitoring configuration such that a monitoring trust chain can be constructed in which software of a monitor having a low reliability level is monitored by a monitor having a higher reliability level than the monitor having the low reliability level, even after the monitoring configuration has been changed.

Through this, even if the monitoring configuration is changed, the software of a monitor having a weak execution privilege can be monitored from a monitor having a strong execution privilege, and the software of a monitor in a virtual machine highly likely to be tampered with can be monitored from a monitor in a virtual machine unlikely to be tampered with. Accordingly, an anomaly can be determined even if one of the monitors having a weak execution privilege has been hijacked.

Additionally, in integrated ECU 200 according to the present embodiment, the manager changes the monitoring configuration in accordance with at least one of whether an external network connection is established, whether an external network connection establishment event occurs, a system state of each virtual machine, a monitoring result from each of the monitors, an execution privilege of a monitor that has detected an anomaly, execution privilege of software that has detected an anomaly, or a destination or a source of a communication log in which an anomaly is detected.

States pertaining to the network connection affect the likelihood of an attack, and thus the monitoring configuration can be changed according to changes in the likelihood of the monitoring target being attacked. Additionally, when some monitors have become disabled due to a single virtual machine restarting or the like, having another monitor take over the monitoring of the disabled monitoring target makes it possible to continuously monitor the monitoring target. Furthermore, when a single virtual machine is determined to be anomalous, having another monitor take over the monitoring of the monitoring target makes it possible to monitor the monitoring target from a trusted monitor. Further still, when a single virtual machine is determined to be anomalous, having another monitor additionally monitor the monitoring target makes it possible to strengthen the monitoring by using a plurality of monitors. Further still, when the CPU or memory resources of a single virtual machine are being pushed to their limit, having another monitor take over the monitoring of the monitoring target makes it possible to reduce the impact on the system caused by the resources being limited.

Additionally, in integrated ECU 200 according to the present embodiment, integrated ECU 200 runs on an in-vehicle system. The manager changes the monitoring configuration related to a virtual machine having a function for controlling a vehicle, in accordance with a travel state of the vehicle. The travel state of the vehicle is one of being stopped, manual driving, advanced driving assistance, or automated driving.

Through this, it can be assumed that during automated driving, advanced driver assistance, or the like, control commands pertaining to the travel, turning, and stopping of the vehicle are transmitted from the software of the control virtual machine that has the vehicle control functions, and the control ECU that controls the engine, steering, brakes, and the like follows the control commands. Accordingly, because the impact of tampering with the software is high, the monitoring configuration can be changed such that the software of the control virtual machine is monitored by a plurality of monitors. It can be assumed that when the vehicle is stopped or during manual driving, the control ECU is not following control commands. Accordingly, because the impact of tampering with the software is low, normal monitoring at a low load can be implemented by only a single monitor.

Additionally, in integrated ECU 200 according to the present embodiment, the manager changes the monitoring configuration using at least one of (i) selecting one of two or more predefined monitoring configurations, (ii) storing the monitoring configuration as a directed graph that takes a monitoring entity as a starting point of a path and a monitoring target as an ending point of the path, and reconstructing the directed graph using a predetermined algorithm, or (iii) storing the monitoring configuration as a tree structure that takes the monitoring entity as a parent node and the monitoring target as a child node, and reconstructing the tree structure using a predetermined algorithm.

This makes it possible to change to an appropriate monitoring configuration according to the current system status and events, from among a plurality of monitoring configuration patterns. Additionally, holding the monitoring configurations in a directed graph data structure makes it possible to recalculate the monitoring configuration such that at least one monitor can monitor the monitoring target, in the event that some monitors have been disabled, an anomaly has been determined in some monitors, or the like. Additionally, the manager is a monitoring device that changes the monitoring configuration by storing the monitoring configuration as a tree structure with a monitor as a node, the monitoring entity as a parent node, and the monitoring target as a child node, and then reconstructing the tree structure using a predetermined algorithm. Additionally, holding the monitoring configurations in a data structure having a tree structure makes it possible to recalculate the monitoring configuration such that at least one monitor can monitor the monitoring target, in the event that some monitors have been disabled, an anomaly has been determined in some monitors, or the like.

Additionally, in integrated ECU 200 according to the present embodiment, integrated ECU 200 further includes a monitoring server communicator that notifies the monitoring server of a monitoring result.

Through this, a security analyst can be notified of the monitoring result via the monitoring server, and can therefore consider taking countermeasures such as updating the software when an anomaly occurs.

Additionally, a monitoring system according to the present embodiment includes a monitoring device and a monitoring server. The monitoring device includes: three or more monitors that each monitor at least one of software and a communication log as a monitoring target; and a monitoring server communicator that transmits at least two of a monitor identifier, a monitoring target identifier, a normal determination time, and an anomaly determination time to the monitoring server as a monitoring result. The three or more monitors include a first monitor, a second monitor, and a third monitor. The first monitor operates with a first execution privilege, the second monitor operates with a second execution privilege that has a reliability level lower than the first execution privilege, and the third monitor operates with a third execution privilege that has a same reliability level as that of the second execution privilege or has a lower reliability level than that of the second execution privilege. The first monitor monitors software of the second monitor, and at least one of the first monitor or the second monitor monitors software of the third monitor, such that a monitoring trust chain can be constructed in which software of a monitor having a low reliability level is monitored from at least one monitor having a high reliability level. The monitoring server includes a monitoring result display that receives the monitoring result and displays the monitoring result in a graphical user interface.

Through this, a security analyst can visually ascertain the monitoring result and can therefore quickly consider taking countermeasures such as updating the software when an anomaly occurs.

Additionally, in the monitoring system according to the present embodiment, the monitoring result display displays the monitoring result in the graphical user interface using at least one of (i) displaying the monitoring result in association with a system architecture and highlighting a monitor in which an anomaly is detected or a monitoring target in which an anomaly is detected, or (ii) displaying the monitoring result in association with a predetermined timeline and highlighting the normal determination time or the anomaly determination time.

Through this, a security analyst can intuitively ascertain the location of the monitor, the location of the monitoring target, and the monitoring result, and can therefore more quickly consider taking countermeasures such as updating the software when an anomaly occurs. Additionally, the security analyst can intuitively ascertain the timeline of the monitoring result and can therefore more quickly consider taking countermeasures such as updating the software when an anomaly occurs.

Additionally, in the monitoring system according to the present embodiment, the monitoring server further includes a monitoring information changer that accepts a change to at least one piece of monitoring information among the monitoring target, a monitor that monitors the monitoring target, a priority of the monitoring target, and a monitoring method corresponding to the priority, and makes a request to the monitoring device to make the change. The monitoring device further includes a monitoring information updater that updates the monitoring information in response to the request from the monitoring information changer.

Through this, if, as a result of analyzing the monitoring result, the security analyst determines that it is necessary to modify the monitoring target, the monitors, the priorities, the monitoring method for each priority, or the like, they can quickly apply the modifications to the system.

### Variation 1 on Detailed Block Diagram of Integrated ECU

FIG. 32 is a block diagram illustrating Variation 1 on the integrated ECU according to the embodiment in detail. Although FIG. 4 assumes that a Type 1 hypervisor HV100 is used as the virtualization software platform, a Type 2 hypervisor HV200 may be used. In this case, host operating system HOS100 starts hypervisor HV200, and hypervisor HV200 starts the virtual machines.

Hypervisor HV200 includes HV monitor HV210 that monitors HV region software and VM region software. Host operating system HOS100 includes host OS monitor HOS110 that monitors host OS region software, HV region software, VM region software, and system calls.

The execution privilege of each program will be described. As in FIG. 4, the strongest secure execution privilege (PL4) is assigned to the secure operating system, and the next-strongest secure execution privilege (PL3) is assigned to the applications running on the operating system. Unlike FIG. 4, the strong execution privilege (PL1) is assigned to host operating system HOS100, and hypervisor HV200 and the virtual machine are assigned the same execution privilege as host operating system HOS100 (PL1). Then, as in FIG. 4, the weakest execution privilege (PL0) is assigned to the applications running on the virtual machines. The execution privileges are, in order of strength, PL4, PL3, PL2, PL1, and PL0.

In this case, it can be assumed that external app A100, which is connected to the external network, has the highest likelihood of being tampered with and therefore has the lowest reliability level; the reliability level is one higher for control app A200 and video app A300, which have the next-weakest execution privilege; the reliability level is one more higher for external virtual machine VM100, control virtual machine VM200, video virtual machine VM300, hypervisor HV200, and host operating system HOS100, which have the next-weakest execution privilege; and the reliability level is highest for secure app SA100 and secure operating system SOS100. Additionally, if host operating system HOS100 provides an external network interface to an external virtual machine by means of a bridge or the like, host operating system HOS100 may be connected to the external network, and storage provided by host operating system HOS100 to virtual machines may be capable of being accessed. As such, unlike hypervisor HV200 in FIG. 4, the software of host operating system HOS100 has a low reliability level. It is therefore desirable that the secure application monitor the software of host operating system HOS100, in addition to hypervisor HV200 and the virtual machines.

It is desirable to implement security countermeasure mechanisms for each of the applications, virtual machines, hypervisor HV200, host operating system HOS100, and secure app SA100, but the risk of the security countermeasure mechanisms themselves being tampered with is an issue. Accordingly, for example, SA monitor SA110 may monitor the software of host OS monitor HOS110, the software of HV monitor HV210, and the software of the virtual machines, and the virtual machine monitors may monitor the application monitors.

Thus, by monitoring each monitor from at least one multilayer monitor operating with a stronger execution privilege, a trust chain for monitoring can be established. This makes it possible to detect anomalies from SA monitor SA110 even if host operating system HOS100, hypervisor HV200, or the like has been hijacked.

Note that hypervisor HV200 may be assigned a stronger execution privilege (PL2) than host operating system HOS100. In this case, the execution privilege, reliability levels, and monitoring trust chain are the same as those described with reference to FIG. 4.

### Variation 2 on Detailed Block Diagram of Integrated ECU

FIG. 33 is a block diagram illustrating Variation 2 on the integrated ECU according to the embodiment in detail. Although FIG. 4 illustrates hypervisor HV100 as executing and monitoring three types of virtual machines, container virtual machine VM400 hosted by hypervisor HV100 may virtualize the application layer using container engine CE100, which is container virtualization infrastructure, and may run container app CA100 and container app CA200.

Container virtual machine VM400 includes VM monitor VM410 that monitors the VM region software, including the software of container engine CE100, the software and settings of container app CA100, and the software and settings of container app CA200. Container app CA200 includes container app monitor CA210 that monitors the app region software, container app CA100, and inter-container communication.

The execution privilege of each program will be described. As in FIG. 4, the strongest secure execution privilege (PL4) is assigned to the secure operating system, the next-strongest secure execution privilege (PL3) is assigned to applications running on the operating system, the next-strongest execution privilege (PL2) is assigned to hypervisor HV100, and the next-strongest execution privilege (PL1) is assigned to the virtual machines. The weakest execution privilege is assigned to container engine CE100, container app CA100, and container app CA200. The execution privileges are, in order of strength, PL4, PL3, PL2, PL1, and PL0.

Here, a plurality of containers operating with the same execution privilege may have different reliability levels. For example, if container app CA100 has a function for communicating with nearby networks, such as Wi-Fi or Bluetooth, and container app CA200 has vehicle control functions, container app CA200 is considered to have a higher reliability level than container app CA100 from the standpoint of tampering with the software. In this case, container app monitor CA210 monitors the software of container app CA100, which makes it possible to establish a monitoring trust chain even among containers operating with the same execution privilege.

In this case, it can be assumed that external app A100, which is connected to the external network, has the highest likelihood of being tampered with and therefore has the lowest reliability level; the reliability level is one higher for container app CA200, which has the next-weakest execution privilege but communicates directly over the nearby network; the reliability level is one more higher for container app CA100 and container engine CE100, which have the same execution privilege but do not communicate directly over the network; the reliability level is one more higher for external virtual machine VM100 and container virtual machine VM400, which have the next-weakest execution privilege; the reliability level is one more higher for hypervisor HV100, which has the next-weakest execution privilege; and the reliability level is highest for secure app SA100 and secure operating system SOS100.

Although it is desirable to implement countermeasure mechanisms for each application, virtual machine, hypervisor HV100, container virtual machine VM400, container app CA100, and container app CA200, the risk of the security countermeasure mechanisms themselves being tampered with is an issue. Accordingly, for example, having SA monitor SA110 monitor the software of HV monitor HV110 and the software of the virtual machines, having VM monitor VM410 monitor container engine CE100, container app CA100, container app CA200, and container app monitor CA210, and having container app monitor CA210 monitor the app monitoring software, container app CA100, and inter-container communication makes it possible to monitor each monitor from at least one multilayer monitor operating with a stronger execution privilege or at a higher reliability level, which in turn makes it possible to construct a monitoring trust chain.

Note that the use of hypervisor HV100 is not required, and the host operating system may run container app CA100 and container app CA200 by virtualizing the applications using container engine CE100. In this case, the descriptions of the execution privilege, reliability level, and monitoring trust chain given with reference to FIG. 33 can be applied in the same manner by removing hypervisor HV100 and replacing it with an operating system serving as a host for container virtual machine VM400.

Additionally, as in Variation 1 and Variation 2 described above, the monitoring device runs on a secure app, a host operating system, one or more of virtualization software platforms, and one or more virtual machines, or runs on one or more of container virtualization platforms and two or more containers. Each of the first execution privilege, the second execution privilege, the third execution privilege, and the fourth execution privilege is one of an execution privilege for the secure app, an execution privilege for the host operating system, an execution privilege for the virtualization software platform, a kernel execution privilege for each of the virtual machines, a user execution privilege for each of the virtual machines, or an execution privilege for each of the containers. Two or more virtual machines are classified as a first virtual machine or a second virtual machine in accordance with a likelihood of being tampered with by an attacker. When two or more monitors of virtual machines that operate with the same execution privilege are present: a monitor of the first virtual machine includes software of a monitor of the second virtual machine as a monitoring target; the two or more monitors of two or more virtual machines that operate with the same execution privileges include the monitor of the first virtual machine and the monitor of the second virtual machine; and the two or more containers are classified as a first container or a second container in accordance with a likelihood of being tampered with by an attacker. Additionally, when two or more monitors, among the monitors, of containers that operate with same execution privileges are present, a monitor of a first container includes software of a monitor of a second container as a monitoring target, and the two or more monitors that operate with the same execution privileges include the monitor of the first container and the monitor of the second container.

Through this, it can be assumed that even if the host operating system executes and manages a plurality of virtual machines using a hypervisor, which is virtualization software platform, or when a plurality of containers are executed and managed using container virtualization infrastructure such as that according to Docker, Kubernetes, or the like, the reliability level of the virtual machines or containers will vary according to the likelihood of tampering, such as whether there is a function for connecting to an external network. Accordingly, by building a monitoring trust chain from a plurality of monitors, an anomaly can be detected from the monitor of the first virtual machine or the monitor of the first container, which have a high reliability level, even if the monitor of the second virtual machine or the second container, which have a low reliability level, has been hijacked.

### Other Embodiments

As described thus far, an embodiment has been given as an example of the technique according to the present disclosure. However, the technique in the present disclosure is not limited thereto, and can also be applied in embodiments in which modifications, replacements, additions, or omissions have been made as appropriate. For example, variations such as those described below are also included in the embodiments of the present disclosure.

(1) Although the foregoing embodiment is described as a security countermeasure taken in an in-vehicle system of an automobile, the technique is not limited to this application. The technique is not limited to automobiles, and can be applied in mobility entities such as construction equipment, agricultural equipment, ships, rail cars, aircraft, and the like. In other words, the technique is applicable as a security measure in mobility systems. The technique may also be applied to industrial control systems for factories and buildings.
(2) Although the foregoing embodiment does not use secure monitor calls used for secure application communication as the communication logs, secure monitor calls may be taken as the monitoring target of VM monitor VM210, HV monitor HV110, or SA monitor SA110. This makes it possible to additionally handle attack attempts on secret information stored by the secure application and secure OS.
(3) Although the foregoing embodiment describes only a configuration in which a monitor is not implemented in secure operating system SOS100, a monitor may be implemented therein. In this case, because secure operating system SOS100 requires an implementation that does not contain vulnerabilities, it is desirable to implement a simple algorithm that only verifies the software of secure apps.
(4) Although the foregoing embodiment described hypervisor HV100 as having three types of virtual machines to be executed and managed, the number of types need not be three, and fewer than three types of virtual machines, or four or more types of virtual machines, may be executed and managed.
(5) Although the foregoing embodiment describes the execution privileges to be assigned as four types of execution privileges, the number of types of execution privileges need not be four, and there may be fewer than four types of execution privileges, or five or more types of execution privileges.
(6) Although the foregoing embodiment describes the reliability level of the virtual machine as differing depending on whether there is a connection to an external network or vehicle control functions, the reliability level of the virtual machine may differ depending on whether there is a user login function, a function for downloading a third party app, or the like. In this case, it can be assumed that if a user login function is provided, there is the possibility of unauthorized logins, and the reliability level is low; and if there is a function for downloading third-party apps, there is the possibility of unauthorized software being downloaded, and the reliability level is low.
(7) Although the foregoing embodiment described providing monitors in all virtual machines, all applications, hypervisor HV100, and secure app SA100, but thus configuration is not absolutely necessary, and it is sufficient to provide at least two monitors for which the execution privilege or the virtual machine reliability level are different.
(8) Some or all of the constituent elements constituting the devices in the foregoing embodiment may be implemented by a single integrated circuit through system LSI (Large-Scale Integration). "System LSI" refers to very-large-scale integration in which multiple constituent elements are integrated on a single chip, and specifically, refers to a computer system configured including a microprocessor, ROM, RAM, and the like. A computer program is recorded in the RAM. The system LSI circuit realizes the functions of the devices by the microprocessor operating in accordance with the computer program. The units of the constituent elements constituting the foregoing devices may be implemented individually as single chips, or may be implemented with a single chip including some or all of the devices. Although the term "system LSI" is used here, other names, such as IC, LSI, super LSI, ultra LSI, and so on may be used, depending on the level of integration. Further, the manner in which the circuit integration is achieved is not limited to LSIs, and it is also possible to use a dedicated circuit or a general purpose processor. An FPGA (Field Programmable Gate Array) capable of post-production programming or a reconfigurable processor in which the connections and settings of the circuit cells within the LSI can be reconfigured may be used as well. Furthermore, should technology for implementing integrated circuits that can replace LSI appear due to advancements in semiconductor technology or the appearance of different technologies, the integration of the above function blocks may be performed using such technology. Biotechnology applications are one such foreseeable example.
(9) Some or all of the constituent elements constituting the foregoing devices may be constituted by IC cards or stand-alone modules that can be removed from and mounted in the apparatus. The IC card or module is a computer system constituted by a microprocessor, ROM, RAM, and the like. The IC card or module may include the above very-large-scale integration LSI circuit. The IC card or module realizes the functions thereof by the microprocessor operating in accordance with the computer program. The IC card or module may be tamper-resistant.
(10) As one aspect of the present disclosure, the anomaly detection method may be a program (a computer program) that implements these methods on a computer, or a digital signal constituting the computer program. Additionally, one aspect of the present disclosure may be a computer program or a digital signal recorded in a computer-readable recording medium such as a flexible disk, hard disk, CD-ROM, MO, DVD, DVD-ROM, DVD-RAM, BD (Blu-ray (registered trademark) Disc), semiconductor memory, or the like. The constituent elements may also be the digital signals recorded in such a recording medium. Additionally, one aspect of the present disclosure may be realized by transmitting the computer program or digital signal via a telecommunication line, a wireless or wired communication line, a network such as the Internet, a data broadcast, or the like. Additionally, one aspect of the present disclosure may be a computer system including a microprocessor and memory, where the memory records the above-described computer program and the microprocessor operates in accordance with the computer program. Additionally, the present disclosure may be implemented by another independent computer system, by recording the program or the digital signal in the recording medium and transferring the recording medium, or by transferring the program or the digital signal over the network or the like.
(11) Aspects realized by combining the constituent elements and functions described in the foregoing embodiment and variations as desired are also included in the scope of the present disclosure.

### [Industrial Applicability]

According to the monitoring device of the present disclosure, anomalies that occur in an in-vehicle system can be detected even when an attacker infiltrates the in-vehicle system and a monitoring program implemented in a region with a low reliability level is tampered with and disabled. It is therefore an object to provide safe automated driving and advanced driving assistance systems.

### [Reference Signs List]

10 Monitoring server
11 In-vehicle system communicator
12 Monitoring result display
13 Monitoring configuration changer
14 Monitoring change rule changer
15 Monitoring information changer
20 In-vehicle system
30 External network
40, 41 CAN
50, 51 Ethernet
200 Integrated ECU
300 Gateway ECU
400a Steering ECU
400b Brake ECU
500 Zone ECU
600a Front camera ECU
600b Rear camera ECU
A100 External app
A101 External communicator
A102 External app executor
A103, A203, A303 App region storage
A110, A210, A310 App monitor
A111, A211, A311, VM111, VM211, VM311, HV111, SA111 Monitoring target obtainer
A112, A212, A312, VM112, VM212, VM312, HV112, SA112 System state obtainer
A113, A213, A313, VM113, VM213, VM313, HV113, SA113 Monitor
A114, A214, A314, VM114, VM214, VM314, HV114, SA114 Monitoring information storage
A115, A215, A315, VM115, VM215, VM315, HV115, SA115 Monitoring information updater
A116, A216, A316, VM116, VM216, VM316, HV116, SA116 Monitoring result notifier
A200 Control app
A201 CAN communicator
A202 Control app executor
A300 Video app
A301 Ethernet communicator
A302 Video app executor
CA100, CA200 Container app
CA210 Container app monitor
CE100 Container engine
HV100, HV200 Hypervisor
HV101 Virtual machine communicator
HV102 Hypercall controller
HV103 HV region storage
HV110, HV210 HV monitor
HOS100 Host operating system
HOS110 Host OS monitor
SA100 Secure app
SA110 SA monitor
SA120 Manager
SA121 Monitoring result obtainer
SA122 System state obtainer
SA123 Monitoring configuration storage
SA124 Monitoring change rule storage
SA125 Monitoring information changer
SA126 Monitoring server communicator
SOS100 Secure operating system
VM100 External virtual machine
VM101, VM201, VM301 App communicator
VM102, VM202, VM302 System call controller
VM103, VM203, VM303 VM region storage
VM104, VM204, VM304 Hypercall invoker
VM110, VM210, VM310, VM410 VM monitor
VM200 Control virtual machine
VM300 Video virtual machine
VM400 Container virtual machine

## Claims

1. A monitoring device comprising:
three or more monitors that each monitor at least one of software or a communication log as a monitoring target,
wherein the three or more monitors include a first monitor, a second monitor, and a third monitor,
the first monitor operates with a first execution privilege,
the second monitor operates with a second execution privilege that has a lower reliability level than that of the first execution privilege,
the third monitor operates with a third execution privilege that has a same reliability level as that of the second execution privilege or has a lower reliability level than that of the second execution privilege,
the first monitor monitors software of the second monitor, and
at least one of the first monitor or the second monitor monitors software of the third monitor.

2. The monitoring device according to claim 1,
wherein the three or more monitors include four or more monitors,
the four or more monitors include the first monitor, the second monitor, the third monitor, and a fourth monitor that operates with a fourth execution privilege that has a same reliability level as that of the third execution privilege or has a lower reliability level than that of the third execution privilege, and
at least one of the first monitor, the second monitor, or the third monitor monitors software of the fourth monitor.

3. The monitoring device according to claim 1,
wherein the monitoring device runs on a secure app, a virtualization software platform, and one or more virtual machines,
the first execution privilege is one of an execution privilege for the secure app, an execution privilege for the virtualization software platform, or a kernel execution privilege for each of the one or more virtual machines,
the second execution privilege is one of the execution privilege for the virtualization software platform, the kernel execution privilege for each of the virtual machines, or a user privilege for each of the one or more virtual machines,
the third execution privilege is one of the kernel execution privilege for each of the one or more virtual machines or the user privilege for each of the one or more virtual machines,
the execution privilege for the secure app has a higher reliability level than that of the execution privilege for the virtualization software platform,
the execution privilege for the virtualization software platform has a higher reliability level than that of the kernel execution privilege for each of the one or more virtual machines, and
the kernel execution privilege for each of the virtual machine has a higher reliability level than that of the user privilege for each of the one or more virtual machines.

4. The monitoring device according to any one of claims 1 to 3,
wherein the monitoring device runs on the virtualization software platform and two or more virtual machines,
the two or more virtual machines are classified as a first virtual machine or a second virtual machine in accordance with a likelihood of being tampered with by an attacker, and
when two or more monitors, among the three or more monitors, that operate with an execution privilege assigned to each of the two or more virtual machines are present,
a monitor of the first virtual machine includes software of a monitor of the second virtual machine as a monitoring target, and
the two or more monitors that operate with the execution privilege assigned to each of the virtual machines include the monitor of the first virtual machine and the monitor of the second virtual machine.

5. The monitoring device according to claim 2,
wherein the monitoring device runs on a secure app, a host operating system, one or more virtualization software platforms, and one or more virtual machines, or runs on one or more container virtualization platforms and two or more containers,
each of the first execution privilege, the second execution privilege, the third execution privilege, and the fourth execution privilege is one of an execution privilege for the secure app, an execution privilege for the host operating system, an execution privilege for the virtualization software platform, a kernel execution privilege for each of the one or more virtual machines, a user execution privilege for each of the one or more virtual machines, or an execution privilege for each of the two or more containers,
two or more virtual machines are classified as a first virtual machine or a second virtual machine in accordance with a likelihood of being tampered with by an attacker,
when two or more monitors, among the four or more monitors, of virtual machines that operate with same execution privileges are present,
a monitor of the first virtual machine includes software of a monitor of the second virtual machine as a monitoring target,
the two or more monitors of two or more virtual machines that operate with the same execution privileges include the monitor of the first virtual machine and the monitor of the second virtual machine, and
the two or more containers are classified as a first container or a second container in accordance with a likelihood of being tampered with by an attacker, and
when two or more monitors, among the monitors, of containers that operate with same execution privileges are present,
a monitor of a first container includes software of a monitor of a second container as a monitoring target, and
the two or more monitors that operate with the same execution privileges include the monitor of the first container and the monitor of the second container.

6. The monitoring device according to any one of claims 1 to 5,
wherein each of the three or more monitors starts monitoring the monitoring target in accordance with a timing of an occurrence of an event including at least one of a predetermined time elapsing, a predetermined time elapsing for an external network connection, a system startup, a system restart, an external network connection being established, or an external device connection.

7. The monitoring device according to any one of claims 1 to 5,
wherein the monitoring device runs on an in-vehicle system, and
each of the three or more monitors starts monitoring the monitoring target in accordance with a timing of an occurrence of an event including at least one of a predetermined travel time elapsing, a predetermined stopped time elapsing, a predetermined distance being traveled, a switch of a travel mode, refueling or recharging ending, vehicle diagnostics being run, or an emergency alert being issued.

8. The monitoring device according to any one of claims 1 to 5,
wherein each of the three or more monitors starts monitoring the monitoring target in accordance with a timing of reaching at least one of a total number of executions of monitoring processing by another monitor, a total number of times an anomaly is determined to have occurred in monitoring processing, or a total number of times a determination of normal has been made in monitoring processing.

9. The monitoring device according to any one of claims 1 to 8,
wherein when the monitoring target is the software, each of the three or more monitors:
obtains, as an obtained value, at least one piece of information among a hash value, a mask value, or a replication value of the software that is the monitoring target, the information being stored in a memory or storage;
compares the obtained value with an expected value that is a correct value defined in advance;
determines that the software is normal when the expected value and the obtained value match; and
determines that the software is anomalous when the expected value and the obtained value do not match.

10. The monitoring device according to claim 9,
wherein the software includes at least one combination among a combination of a program and a configuration file of the virtualization software platform, a combination of a kernel program and a configuration file of each of the virtual machines, a combination of a program and a configuration file of a user app running on each of the virtual machines, or a combination of a program and a configuration file of each of the three or more monitors.

11. The monitoring device according to any one of claims 1 to 10,
wherein when the monitoring target is the communication log, each of the three or more monitors:
obtains the communication log;
verifies the communication log using at least one of an allow list, a deny list, or statistical information for a normal situation; and
performs at least one determination among (i) a first determination of determining that the communication log is normal when the communication log is included in the allow list, and determining that the communication log is anomalous when the communication log is not included in the allow list, (ii) a second determination of determining that the communication log is normal when the communication log is not included in the deny list, and determining that the communication log is anomalous when the communication log is included in the deny list, or (iii) a third determination of determining that the communication log is normal when the communication log does not deviate from the statistical information for a normal situation, and determining that the communication log is anomalous when the communication log deviates from the statistical information for a normal situation.

12. The monitoring device according to claim 11,
wherein the communication log includes at least one of Ethernet, a CAN protocol, a FlexRay protocol, a SOME/IP protocol, a SOME/IP-SD protocol, a system call, or a hypercall.

13. The monitoring device according to any one of claims 1 to 12,
wherein each of the three or more monitors changes at least one of a monitoring frequency of the monitoring target, a verification method of the monitoring target, or a selection method of the monitoring target in accordance with a priority set for each of monitoring targets that are each the monitoring target.

14. The monitoring device according to claim 13,
wherein the priority is set in accordance with at least one of an execution privilege of the monitoring target, whether one monitor among the three or more monitors or the virtual machine on which the monitor operates has a function for connecting to an external network, or whether the one monitor or the virtual machine on which the monitor operates has a vehicle control function.

15. The monitoring device according to any one of claims 1 to 14, further comprising:
a manager that changes at least one of a priority included in monitoring information, or a monitoring configuration that is a combination of a monitoring entity included in the monitoring target and the monitoring target, in accordance with a state of a system in which the monitoring device operates or in accordance with an event.

16. The monitoring device according to claim 15,
wherein the manager changes the priority in accordance with at least one of whether an external network connection is established, whether an external network connection establishment event occurs, a system state of a monitoring machine, a monitoring result from each of the monitors, an execution privilege of a monitor that has detected an anomaly, an execution privilege of software that has detected an anomaly, or a destination or a source of a communication log in which an anomaly is detected.

17. The monitoring device according to claim 15,
wherein the monitoring device runs on an in-vehicle system,
the manager changes the priority of a monitoring target operating on a virtual machine having a function for controlling a vehicle, in accordance with a travel state of the vehicle, and
the travel state of the vehicle is one of being stopped, manual driving, advanced driving assistance, and automated driving.

18. The monitoring device according to claim 15,
wherein the manager changes the monitoring configuration such that a monitoring trust chain can be constructed in which software of a monitor having a low reliability level is monitored by a monitor having a higher reliability level than the monitor having the low reliability level, even after the monitoring configuration has been changed.

19. The monitoring device according to claim 15 or 18,
wherein the manager changes the monitoring configuration in accordance with at least one of whether an external network connection is established, whether an external network connection establishment event occurs, a system state of each virtual machine, a monitoring result from each of the monitors, an execution privilege of a monitor that has detected an anomaly, an execution privilege of software that has detected an anomaly, or a destination or a source of a communication log in which an anomaly is detected.

20. The monitoring device according to claim 15 or 18,
wherein the monitoring device runs on an in-vehicle system,
the manager changes the monitoring configuration related to a virtual machine having a function for controlling a vehicle, in accordance with a travel state of the vehicle, and
the travel state of the vehicle is one of being stopped, manual driving, advanced driving assistance, and automated driving.

21. The monitoring device according to any one of claims 15, 19, and 20,
wherein the manager changes the monitoring configuration using at least one of (i) selecting one of two or more predefined monitoring configurations, (ii) storing the monitoring configuration as a directed graph that takes the two or more monitors as vertices, a monitoring entity as a starting point of a path, and a monitoring target as an ending point of the path, and reconstructing the directed graph using a predetermined algorithm, or (iii) storing the monitoring configuration as a tree structure that takes the two or more monitors as nodes, the monitoring entity as a parent node, and the monitoring target as a child node, and reconstructing the tree structure using a predetermined algorithm.

22. The monitoring device according to claim 1, further comprising:
a monitoring server communicator that notifies the monitoring server of a monitoring result.

23. A monitoring system comprising a monitoring device and a monitoring server,
wherein the monitoring device includes:
three or more monitors that each monitor at least one of software and a communication log as a monitoring target; and
a monitoring server communicator that transmits at least two of a monitor identifier, a monitoring target identifier, a normal determination time, and an anomaly determination time to the monitoring server as a monitoring result,
the three or more monitors include a first monitor, a second monitor, and a third monitor,
the first monitor operates with a first execution privilege,
the second monitor operates with a second execution privilege that has a lower reliability level than that of the first execution privilege, and
the third monitor operates with a third execution privilege that has a same reliability level as that of the second execution privilege or has a lower reliability level than that of the second execution privilege,
the first monitor monitors software of the second monitor,
at least one of the first monitor or the second monitor monitors software of the third monitor, and
the monitoring server includes a monitoring result display that receives the monitoring result and displays the monitoring result in a graphical user interface.

24. The monitoring system according to claim 23,
wherein the monitoring result display displays the monitoring result in the graphical user interface using at least one of (i) displaying the monitoring result in association with a system architecture and highlighting a monitor in which an anomaly is detected or a monitoring target in which an anomaly is detected, or (ii) displaying the monitoring result in association with a predetermined timeline and highlighting the normal determination time or the anomaly determination time.

25. The monitoring system according to claim 24,
wherein the monitoring server further includes a monitoring information changer that accepts a change to at least one piece of monitoring information among the monitoring target, a monitor that monitors the monitoring target, a priority of the monitoring target, and a monitoring method corresponding to the priority, and makes a request to the monitoring device to make the change, and
the monitoring device further includes a monitoring information updater that updates the monitoring information in response to the request from the monitoring information changer.

26. A monitoring method executed by a monitoring device including three or more monitors,
wherein the three or more monitors include a first monitor, a second monitor, and a third monitor, the first monitor operates with a first execution privilege, the second monitor operates with a second execution privilege that has a lower reliability level than that of the first execution privilege, and the third monitor operates with a third execution privilege that has a same reliability level as that of the second execution privilege or has a lower reliability level than that of the second execution privilege, and
the monitoring method comprising:
monitoring software of the second monitor by the first monitor; and
monitoring software of the third monitor by at least one of the first monitor or the second monitor.
